# EUROPÄISCHE PATENTSCHRIFT

(11) **EP 4 122 788 B1**
(45) Veröffentlichungstag und Bekanntmachung des Hinweises auf die Patenterteilung: **18.09.2024**
(21) Anmeldenummer: 22184040.8
(22) Anmeldetag: 11.07.2022
(51) Int. Cl.: B61B 11/00, H02K 49/04, H02K 49/10

(54) **SCHLEPPVORRICHTUNG**
TOWED IMPLEMENT
DISPOSITIF DE REMORQUAGE

(30) Priorität: 22.07.2021 DE 102021119026
(43) Veröffentlichungstag der Anmeldung: 25.01.2023
(73) Patentinhaber: Glasl, Peter, 83646 Wackersberg (DE); Glasl, Anton, 83646 Wackersberg (DE)
(72) Erfinder: Glasl, Peter, 83646 Wackersberg (DE); Glasl, Anton, 83646 Wackersberg (DE)
(74) Vertreter: Beckord & Niedlich Patentanwälte PartG mbB

(56) Entgegenhaltungen:
- DE-A1- 1 638 215
- DE-U1- 29 804 849

## Beschreibung

Die Erfindung betrifft eine Schleppvorrichtung für einen Schlepplift mit, vorzugsweise hoher, Schleppseilführung mit einem Gehäuseteil zur Fixierung am Förderseil, einer relativ zum Gehäuseteil um eine Rotationsachse drehbar gelagerten Seilspule mit einem Seilaufnahmeraum zur Aufnahme eines Schleppseils und mit einer Permanentmagnet-Wirbelstrombremse zur Abbremsung der Seilspule, umfassend zwei durch einen Spaltabstand voneinander beabstandete magnetisch zusammenwirkende Wirbelstrombremsscheiben, von denen zumindest eine Wirbelstrombremsscheibe eine elektrisch leitfähige Leiterscheibe und eine andere Wirbelstrombremsscheibe eine Magnetscheibe mit einer Mehrzahl an, vorzugsweise runden, Permanentmagneten umfasst.

Schleppvorrichtungen, oder auch manchmal "Einzugsgehänge" genannt, stellen das flexible Bindeglied zwischen einer Anzahl Personen, z. B. einem Ski- und/oder Snowboardfahrer, und einem im Normalbetrieb mit einer konstanten Geschwindigkeit angetriebenem Förderseil des Schlepplifts dar. Sie sind üblicherweise in gleichen Abständen über eine c-förmig gebogene Gehängestange am Förderseil fest angeklemmt bzw. eingeklemmt und weisen jeweils ein ausziehbares Schleppseil mit einem Liftbügel zur bequemen Beförderung der zu schleppenden Anzahl an Personen auf.

Eine bestehende Problematik liegt hierbei darin, die beim "Einstieg" in den fahrenden Schlepplift noch stehenden Personen, möglichst gleichmäßig, ohne eine ruckartige Anfahrbewegung, auf die Geschwindigkeit des Förderseils zu beschleunigen. Beim Anfahren eines Skifahrers wird der mit dem Schleppseil verbundene Liftbügel gegen die Kraft einer Einzugsfeder im Einzugsgehänge aus dem Einzugsgehänge bzw. der Seilspule des Einzugsgehänges ausgezogen. Vereinfacht dargestellt, stellt sich beim Anfahren während dieser Lastfahrt des Schlepplifts dabei ein Gleichgewicht zwischen der Gewichts- bzw. Reibungskraft des Skifahrers und der Federkraft der Einzugsfeder ein, so dass der Skifahrer abhängig von seinem Gewicht, spätestens jedoch bei voll ausgezogenem bzw. ausgespultem, also abgewickelten Schleppseil - in der Regel aber bereits davor - mit der Geschwindigkeit des Förderseils befördert bzw. mitgeschleppt wird. Dabei kommt es oftmals zu einem unerwartet, ruckartigen Anfahren mit rascher dynamischer Beschleunigung. Gerade bei Anfängern, aber auch bedingt durch schwierige Begebenheiten, wie schlechte Sicht, schräger Anfahrtsbereich, rasch ansteigende Steigung, Seitenwind etc. kann dies dann direkt zu einem Sturz nach dem Anfahren führen. In der Regel muss dann der Schlepplift angehalten oder zumindest abgebremst werden, was wiederum beim erneuten Anfahren für Schwierigkeiten sorgen kann. Außerdem wird damit der Betrieb immer wieder aufgehalten und damit sinkt insgesamt die Personenförderleistung des Schlepplifts. Zudem hat dies auch einen Einfluss auf die Attraktivität von Schleppliften. Wenn Personen die Möglichkeit haben, wählen sie daher oftmals lieber Sessellifte als Schlepplifte.

Beim Ausstieg nach einem Loslassen (z. B. kurz vor Erreichen einer der Umlenk- bzw. Antriebsscheiben des Schlepplifts) wird das ausgezogene Schleppseil mitsamt dem Liftbügel automatisch wieder eingezogen, so dass die Liftbügel während der Leerfahrt (zurück zur anderen Umlenk- bzw. Antriebsscheibe) möglichst nahe bzw. dicht am Förderseil, sprich unmittelbar unterhalb hängend transportiert werden. Einzugsgehänge bzw. Schleppvorrichtungen müssen also nicht nur Personen am Liftbügel sachte beschleunigen können, sondern auch den Liftbügel anschließend möglichst rasch kontrolliert wieder einziehen können. Die DE 16 38 215 A1 offenbart eine Vorrichtung zum Dämpfen von Beschleunigungseinrichtungen, insbesondere bei Seiltrommeln von Schleppliftgehängen und offenbart die Präambel des Anspruchs 1.

Aus der DE 298 04 849 U1 ist beispielsweise ein Skilift-Einzugsgehänge mit Permanent-Wirbelstrombremse bekannt. Das Skilift-Einzugsgehänge weist ein drehrichtungsunabhängiges Bremsmoment auf, was dafür sorgt, dass nur entweder der Einziehvorgang oder der Ausziehvorgang ideal eingestellt werden können. Aus der DE 298 04 849 U1 geht zudem hervor, dass sich auch alternative Bremssysteme, wie z. B. Fliehkraftbremsen, Hydraulik-Kupplungen, Öl-Zahnradpumpen aus den darin genannten Gründen nicht eignen, die bestehende Problematik insgesamt zufriedenstellend zu lösen.

Es ist daher eine Aufgabe der vorliegenden Erfindung, die besagten Nachteile des Stands der Technik zu überwinden und eine verbesserte Schleppvorrichtung anzugeben.

Diese Aufgabe wird durch eine Schleppvorrichtung nach Patentanspruch 1 und ein Verfahren nach Anspruch 14 gelöst.

Wie eingangs erwähnt umfasst die Schleppvorrichtung einen Gehäuseteil zur Fixierung bzw. Befestigung am Förderseil. Der Gehäuseteil kann über Befestigungsmittel verfügen, um ihn z. B. an einer üblichen c-förmig gebogenen Gehängestange zur indirekten Festklemmung am Förderseil anzubringen. Unter dem Gehäuseteil ist sowohl eine überwiegend geschlossene äußere Hülle zu verstehen, als auch innere Strukturen, in welchen die darin befindlichen Komponenten passend gelagert sind. Der Gehäuseteil kann mit weiteren Gehäuseteilen zu einem die Schleppvorrichtung umgebenden Gehäuse gehören, wie weiter unten noch erläutert wird.

Weiter umfasst die Schleppvorrichtung eine relativ zum Gehäuseteil um eine Rotationsachse in einer ersten und zweiten Spulrichtung drehbar gelagerte Seilspule bzw. Seiltrommel. Sie weist wiederum einen Seilaufnahmeraum zur Aufnahme desselben auf, d. h., dass das Schleppseil darin aufwickelbar bzw. einspulbar ist.

Üblicherweise ist die Seilspule wie oben erwähnt mit einer Einzugsfeder bzw. Rückstellfeder zum Einspulen des Schleppseils versehen bzw. gekoppelt. Die Einzugsfeder kann dabei leicht vorgespannt sein und wird beim Ausspulen weiter gespannt oder zusammengezogen, so dass sie dann beim Einspulen das Schleppseil wieder vollständig in den Seilaufnahmeraum aufwickelt. Die Einzugsfeder kann beispielsweise im Bereich neben einer Außenbordscheibe bzw. einem Trommelflansch radial außen auf einer Federtrommel des Seilaufnahmeraums angeordnet sein. Dabei kann sie am radial inneren Ende in einem Befestigungsschlitz der Federtrommel der Seilspule befestigt bzw. verankert sein. Am radial äußeren Ende wiederum kann sie gegen den Gehäuseteil zur Fixierung am Förderseil gelagert sein. Beispielsweise kann sie sich also direkt dagegen abstützen. Alternativ könnte sie aber beispielsweise auch indirekt über einen weiteren Gehäuseteil des besagten Gehäuses gegen den Gehäuseteil zur Fixierung am Förderseil gelagert sein.

Bei der Rotationsachse handelt es sich um eine durch das Zentrum der Schleppvorrichtung, also durch den Gehäuseteil und die Seilspule, verlaufende Achse, welche somit zugleich entlang einer Spulenachse der Seilspule verläuft und relativ zu der diese Komponenten in einer ersten Spulrichtung und einer entgegengesetzten zweiten Spulrichtung gegeneinander rotierbar sind, wie weiter unten noch genauer erläutert wird.

Ferner weist die Schleppvorrichtung wie ebenfalls eingangs bereits erwähnt eine Permanentmagnet-Wirbelstrombremse zur Abbremsung der Seilspule bzw. des Schleppseils der Seilspule auf. Denn nach der Lenzschen Regel wird durch eine Änderung des magnetischen Flusses durch eine Leiterschleife eine Spannung induziert, so dass der dadurch fließende Strom ein Magnetfeld erzeugt, welches der Änderung des magnetischen Flusses entgegenwirkt, ggf. verbunden mit mechanischen Kraftwirkungen (Lorentzkraft).

Die Permanentmagnet-Wirbelstrombremse umfasst dazu zwei durch einen Spaltabstand voneinander beabstandete magnetisch zusammenwirkende Wirbelstrombremsscheiben.

Bei dem Spaltabstand handelt es sich beispielsweise um eine Beabstandung in Form einer Luftbrücke bzw. eines Luftspalts zwischen Leiterscheibe und Magnetscheibe, d. h. die Scheiben sind stets in einem Abstand eines Spalts, also in einem Spaltabstand zueinander absolut berührungsfrei angeordnet und können beispielsweise verschleißfrei relativ zueinander rotieren. Dadurch ist die Permanentmagnet-Wirbelstrombremse absolut verschleißfrei und bedarf kaum einer Wartung. Beispielsweise müssen keine Bremsbeläge oder dergleichen von Zeit zu Zeit gewechselt werden, wie dies bei üblichen Bremsen erforderlich ist.

Unter Wirbelstrombremsscheiben sind hier Bremsscheiben zu verstehen, die verschleißfrei arbeiten, also beispielsweise nicht mittels mechanischer Reibung auf- bzw. aneinander bremsen, sondern kontaktfrei unter Nutzung von induzierten Wirbelströmen, wie weiter unten noch erläutert wird. Magnetisch zusammenwirkend meint, dass sich zwischen den Wirbelstrombremsscheiben eine magnetische Kraftwirkung äußert, also einerseits ein Magnetfeld von den Wirbelstrombremsscheiben erzeugt wird und andererseits auf sie wirkt. Bei den Wirbelstrombremsscheiben handelt es sich demnach entweder um Magneten, magnetisierte bzw. magnetisierbare Objekte und/oder um bewegte elektrische Ladungen.

Von diesen Wirbelstrombremsscheiben umfasst wie eingangs erwähnt zumindest eine Wirbelstrombremsscheibe eine elektrisch leitfähige bzw. leitende Leiterscheibe und eine andere Wirbelstrombremsscheibe eine Magnetscheibe mit einer Mehrzahl an Permanentmagneten.

Elektrische Leitfähigkeit oder auch Konduktivität bezeichnet eine physikalische Größe, die angibt, wie stark die Fähigkeit eines Stoffes ist, elektrischen Strom zu leiten. Bei dem Stoff der Leiterscheibe handelt es sich gemäß einer üblichen Unterteilung der elektrischen Leitfähigkeit vorzugsweise mindestens um einen "Leiter" (typischerweise bei 25°C: >10^6 S/m), also z. B. um Metall oder eine Legierung.

Allgemein handelt es sich bei der Leiterscheibe um einen rotationsymmetrischen Körper, bevorzugt in Form einer einfachen, flachen Kreisscheibe, welcher sich - bezogen auf die Rotationsachse z. B. bei einer Anordnung axial an die Seilspule angrenzend - an die Seilspule drehfest koppeln lässt, z. B. mithilfe von Löchern, in die Schrauben oder Stifte eingreifen oder dergleichen. Die Leiterscheibe kann dabei wie bevorzugt relativ dünn sein, z. B. wenige Millimeter bis zu einem Zentimeter dick. Damit kann bei der Konstruktion Gewicht eingespart werden.

Bevorzugt kann die Leiterscheibe auf einer von der Magnetscheibe abgewandten Seite einen Eisenrückschluss aufweisen. Der Eisenrückschluss wirkt wie eine Art "Joch" zur Verstärkung des Magnetfelds wie dies bei einem hufeisenförmigen Magneten der Fall ist und ist fest bzw. starr mit der Leiterscheibe verbunden.

Mit Magnetscheibe ist hier eine kreisförmige oder kreisringförmige Scheibe bzw. eine Art Teller gemeint, auf welcher sich beispielsweise Permanentmagneten kreisringförmig radial außen, in einer Umfangsrichtung aneinander angrenzend, vorzugsweise gleichmäßig z. B. auf einem Teilkreis verteilt, anordnen lassen und welche im Wesentlichen die Form und den Radius der Leiterscheibe aufweist. Eine derartige Anordnung sämtlicher Permanentmagneten einseitig nur an der Magnetscheibe gegenüber der Leiterscheibe ist damit sehr einfach zu warten, da, wenn einmal eine diesbezügliche Störung auftritt, die Magnetscheibe schnell als Ganzes durch eine neue ausgetauscht werden könnte und die defekte anschließend wieder repariert werden kann, ohne den Betrieb länger aufzuhalten. Alternativ oder zusätzlich können natürlich auch einzelne Permanentmagneten getauscht werden.

Die Permanentmagneten können vorteilhafterweise mit wechselnd orientiertem Magnetfeld, also mit sich abwechselnden Polsegmenten bzw. alternierender Polarität ausgeführt und/oder angeordnet sein. Mehrzahl meint grundsätzlich mindestens zwei, hier können jedoch vorzugsweise mindestens vier oder mehr Permanentmagneten angedacht sein. Hierbei bietet sich ein Kompromiss aus Größe und Anzahl an. Bei den Permanentmagneten kann es sich vorzugsweise um runde Magneten bzw. Rundmagneten handeln.

An dieser Stelle sei erwähnt, dass es vorteilhaft ist, prinzipiell möglichst viele Magnetfeldwechsel, sprich eher viele kleine Permanentmagneten nebeneinander entlang eines Kreisrings anzuordnen als ein paar wenige große Permanentmagneten, da die Bremswirkung der Permanentmagnet-Wirbelstrombremse jeweils durch die Relativbewegung der elektrisch leitfähigen Leiterscheibe in ein Magnetfeld hinein bzw. aus einem Magnetfeld der Permanentmagneten der Magnetscheibe heraus entsteht. Auf der anderen Seite sollten es aber auch nicht zu viele Permanentmagneten sein, da sonst die Kraft der einzelnen Permanentmagneten möglicherweise zu klein werden könnte. In einem weiter unten noch erläuterten Ausführungsbeispiel hat sich beispielsweise eine Anzahl von zehn Permanentmagneten als sehr guter Kompromiss herausgestellt, ohne die Erfindung darauf zu beschränken.

Bei der Permanentmagnet-Wirbelstrombremse ist dabei eine der Wirbelstrombremsscheiben mit der Seilspule und die andere der Wirbelstrombremsscheiben mit dem Gehäuseteil gekoppelt.

Die mit der Seilspule gekoppelte Wirbelstrombremsscheibe kann vorzugsweise drehfest mit der Seilspule gekoppelt sein, d. h. sich stets sofort mit der Seilspule mitdrehen, wenn die die Seilspule bewegt bzw. gedreht wird.

Bei der anderen Kopplung, also vorzugsweise der Kopplung mit dem Gehäuseteil, handelt es sich demgegenüber um eine abschnittsweise drehfeste Kopplung, da die Komponenten zumindest in einer Drehrichtung bzw. Spulrichtung erst nach einem gewissen Drehwinkel bzw. Spiel am weiteren Mitdrehen gehindert werden, wie im weiteren Verlauf noch erläutert wird.

Insbesondere kann dabei entweder die Leiterscheibe oder die Magnetscheibe drehfest mit der Seilspule gekoppelt sein. Drehfest gekoppelt meint, dass sich die Leiterscheibe oder die Magnetscheibe im Betrieb mit der Seilspule bzw. der Rotation der Seilspule mitdrehen.

Im Gegensatz zum eingangs genannten Stand der Technik ist die Permanentmagnet-Wirbelstrombremse jedoch dazu ausgebildet, die Seilspule abhängig von der Spulrichtung unterschiedlich stark abzubremsen.

Erfindungsgemäß ist nämlich entsprechend zumindest eine der Wirbelstrombremsscheiben derart mittels einer Verstellkinematik bzw. mittels eines Verstellmechanismus verstellbar mit der Seilspule bzw. mit dem Gehäuseteil gekoppelt, dass der Spaltabstand zwischen den Wirbelstrombremsscheiben in einer ersten Spulrichtung der Seilspule geringer ist als in einer entgegengesetzten, zweiten Spulrichtung der Seilspule.

Insbesondere sind konkret die Magnetscheibe oder die Leiterscheibe derart mittels der Verstellkinematik verstellbar mit dem Gehäuseteil gekoppelt, dass sie in einer ersten Spulrichtung zum Ausspulen des Schleppseils der Seilspule relativ zum Gehäuseteil um die Rotationsachse näher an der Leiterscheibe bzw. der Magnetscheibe angeordnet sind als in einer entgegengesetzten, zweiten Spulrichtung zum Einspulen des Schleppseils.

Mit anderen Worten ist beispielsweise die Magnetscheibe - z. B. wenn die Leiterscheibe drehfest mit der Seilspule mitdrehend gekoppelt ist - derart mit dem Gehäuseteil gekoppelt, dass der Spaltabstand zwischen Magnetscheibe und Leiterscheibe in der ersten Spulrichtung zum Ausspulen kleiner bzw. geringer ist als in der zweiten Spulrichtung zum Einspulen des Schleppseils.

Alternativ ist die Leiterscheibe - z. B. wenn die Magnetscheibe drehfest mit der Seilspule mitdrehend gekoppelt ist - derart mit dem Gehäuseteil gekoppelt, dass der Spaltabstand zwischen Magnetscheibe und Leiterscheibe in der ersten Spulrichtung zum Ausspulen kleiner bzw. geringer ist als in der zweiten Spulrichtung zum Einspulen des Schleppseils. Es ist also hier stets jeweils eine Wirbelstrombremsscheibe drehfest bzw. mitdrehend mit der Seilspule und die jeweils andere Scheibe wie zuvor beschrieben mit dem Gehäuseteil gekoppelt.

Grundsätzlich könnte bei einer weiteren alternativen Variante aber beispielsweise auch eine der beiden Wirbelstrombremsscheiben, also entweder die Magnetscheibe oder die Leiterscheibe, fix mit dem Gehäuseteil gekoppelt sein und die jeweils andere Wirbelstrombremsscheibe, also dann respektive die Leiterscheibe bzw. die Magnetscheibe derart mittels der Verstellkinematik verstellbar mit der Seilspule mitdrehend gekoppelt sein, dass der Spaltabstand zwischen den Wirbelstrombremsscheiben in einer ersten Spulrichtung der Seilspule geringer ist als in einer entgegengesetzten, zweiten Spulrichtung der Seilspule. In diesem Fall würde sich die verstellbare Kopplung insgesamt mit der Seilspule mitdrehen. Bei dieser Anordnung möglicherweise auftretende Fliehkräfte bzw. Zentrifugalkräfte etc. können bei Bedarf entsprechend konstruktiv berücksichtigt werden. Bevorzugt ist daher aber die Verstellkinematik an dem feststehenden Gehäuseteil gekoppelt.

Es ist übrigens auch möglich, dass sowohl die Kopplung der Wirbelstrombremsscheibe mit der Seilspule als auch die Kopplung der Wirbelstrombremsscheibe mit dem Gehäuseteil jeweils über eine Verstellkinematik erfolgt, d. h. beide Wirbelstrombremsscheiben können sich dann je nach Drehrichtung voneinander weg bzw. aufeinander zu bewegen.

Bei der Erfindung wird dabei allgemein das folgende zugrundeliegende elektromagnetische Prinzip genutzt: Das magnetische Feld der Permanentmagnete induziert bei einer Relativrotation der beiden Wirbelstrombremsscheiben, d. h. also beispielsweise der Leiterscheibe zur Magnetscheibe in der Leiterscheibe, die sich dann z. B. aufgrund der Rotation der Seilspule mitdreht, eine Spannung. Die induzierte Spannung bewirkt einen Stromfluss senkrecht und wirbelförmig zu einem magnetischen Fluss der Permanentmagnete. Hierbei werden Wirbelströme gebildet. Die Wirbelströme erzeugen in der Leiterscheibe ein magnetisches Feld, das einem magnetischen Feld der Permanentmagneten entgegenwirkt. Hierdurch wird ein Bremsmoment erzeugt, welches die Leiterscheibe abbremst. Die Seilspule wird infolge der drehfesten Verbindung der Leiterscheibe mit der Seilspule ebenfalls abgebremst.

Dementsprechend ist die Kopplung dabei so gewählt, dass die Scheiben, die sich grundsätzlich aufgrund magnetischer Anziehung eigentlich zusammen miteinander drehen möchten, in einer ersten Spulrichtung nahezu direkt daran gehindert werden sich miteinander mitzudrehen, so dass wie oben erwähnt Wirbelströme entstehen, die dafür sorgen, dass eine Relativbewegung der Scheiben gebremst wird und sich die Scheiben voneinander abstoßen. Der Abstoßeffekt durch das erzeugte Gegenmagnetfeld, der erst mit zunehmender Relativgeschwindigkeit gegenüber der magnetischen Anziehung der beiden Scheiben zueinander überwiegt, wird dabei allerdings mit der oben erläuterten Kopplung an dem Gehäuseteil in der ersten Spulrichtung verhindert. In der zweiten Spulrichtung hingegen erlaubt die Kopplung, dass sich die Scheiben mit zunehmender Stärke des Abstoßeffekts mit zunehmender Geschwindigkeit in einem größeren Abstand zueinander anordnen können. Dabei nimmt dann die relative Bremswirkung zwischen den Scheiben entsprechend ab und die Rotation der Seilspule in dieser Einspulrichtung wird weniger gebremst. D. h. durch die gegenseitige magnetische Wechselwirkung der beiden Wirbelstrombremsscheiben werden diese zwangsläufig durch die anfängliche Mitbewegung in einer der beiden Rotationsrichtungen mithilfe der Verstellkinematik voneinander wegbewegt.

Ein erfindungsgemäßes Verfahren zum Abbremsen eines Schleppseils einer Schleppvorrichtung für Schlepplifte mit, vorzugsweise hoher, Förderseilführung umfasst den nachfolgend noch beschriebenen Ablauf. Dafür weist die Schleppvorrichtung wie oben bereits erwähnt einen Gehäuseteil zur Fixierung am Förderseil sowie eine relativ zum Gehäuseteil um eine Rotationsachse drehbar gelagerte Seilspule auf, welche Seilspule einen Seilaufnahmeraum zur Aufnahme des Schleppseils umfasst.

Bei dem erfindungsgemäßen Verfahren werden dabei wie erläutert zwei durch einen Spaltabstand voneinander beabstandete magnetisch zusammenwirkende Wirbelstrombremsscheiben, von denen zumindest eine Wirbelstrombremsscheibe eine elektrisch leitfähige Leiterscheibe und eine andere Wirbelstrombremsscheibe eine Magnetscheibe mit einer Mehrzahl an, vorzugsweise runden, Permanentmagneten umfasst, relativ zueinander abgebremst.

Denn dabei dreht sich eine der Wirbelstrombremsscheiben mit der Seilspule mit und die andere der Wirbelstrombremsscheiben stoppt ab einem gewissen Drehwinkel durch eine Kopplung mittels einer Verstellkinematik mit dem Gehäuseteil ab, d. h. sie wird am Weiterdrehen gehindert.

Bei dem erfindungsgemäßen Verfahren wird dabei also insbesondere entweder bei einer ersten Variante eine mit der Seilspule drehfest gekoppelte elektrisch leitfähige Leiterscheibe mit der Seilspule mitbewegt bzw. mitgedreht.

Die Drehbewegung bzw. Rotation der Seilspule erfolgt dabei beispielsweise dadurch, dass eine stehende Person, die mit dem Schlepplift fahren möchte, einen am Schleppseil angebrachten Liftbügel einer der Schleppvorrichtungen, welche dafür am Förderseil des Schlepplifts fest angeklemmt sind, greift und diesen festhält bzw. hinter dem Körper oder an einem Fahrgerät, wie z. B. einem Fahrrad, Kart, Rodel, etc. einhakt. Durch die simultan ablaufende konstante Fahrbewegung des Förderseils des Schlepplifts wird das Schleppseil - welches den Liftbügel, also die stehende Person, mit der sich wegbewegenden Schleppvorrichtung, also einer Befestigungsstelle am Förderseil verbindet-flexibel aus der Seilspule ausgezogen bzw. ausgespult.

Da der Liftbügel über das Schleppseil und die Seilspule relativ flexibel in der Länge aus der Schleppvorrichtung ausspulbar ist, wird zunächst eine gewisse Seillänge des Schleppseils von der Seilspule abgewickelt bzw. ausgezogen, ehe die Person langsam stetig beschleunigt und über das zumindest zum Teil ausgezogene Schleppseil mitgezogen bzw. geschleppt wird. Die Person wird dabei ab dem Zeitpunkt mitgezogen bzw. geschleppt, an dem die Federkraft der Einzugsfeder bzw. die Kraft des Schleppseils die Reibungskraft der Person zum Untergrund also sozusagen die Trägheit der Masse der Person überwindet. Abhängig vom Gewicht der Person kann dabei das Schleppseil mehr oder weniger weit, höchstens jedoch vollständig, ausgespult sein und damit die Einzugsfeder mehr oder weniger stark, höchstens jedoch "maximal" gespannt sein.

Insbesondere wird bei dem Verfahren ferner die Seilspule durch eine von der Leiterscheibe beabstandete Magnetscheibe mit einer Mehrzahl von Permanentmagneten abgebremst.

Das Bremsmoment, das für die Bremsung sorgt, wird - wie oben bereits detaillierter erläutert wurde - noch einmal vereinfacht ausgedrückt durch die bei der Relativbewegung zwischen Leiterscheibe und Magnetscheibe entstehenden Wirbelströme und das damit erzeugte Magnetfeld, welches dem Magnetfeld der Permanentmagneten entgegengerichtet ist, erzeugt.

Bei einer alternativen, zweiten Variante wird dabei eine mit der Seilspule drehfest gekoppelte Magnetscheibe mit einer Mehrzahl von Permanentmagneten mit der Seilspule mitbewegt und die Seilspule durch eine von der Magnetscheibe beabstandete Leiterscheibe abgebremst.

Erfindungsgemäß werden außerdem die Magnetscheibe und die Leiterscheibe in einer ersten Spulrichtung der Seilspule um die Rotationsachse bei einem Ausspulen des Schleppseils in einem geringeren bzw. kleineren Spaltabstand zueinander gehalten als in einer entgegengesetzten, zweiten Spulrichtung der Seilspule um die Rotationsachse bei einem Einspulen des Schleppseils.

Dabei lässt sich eine Stärke des Bremsmoments durch die Änderung des Abstands, also einer Distanz bzw. dem Spalt zwischen Leiterscheibe und Magnetscheibe beeinflussen. Konkret wird die sich bei der jeweiligen Variante bewegende Scheibe, also die Leiterscheibe bei der ersten Variante und die Magnetscheibe bei der zweiten Variante, und damit jeweils die Seilspule bei einer Verringerung des Abstands der beiden Scheiben voneinander stärker und bei einer Erhöhung des Abstands geringer gebremst.

Die erfindungsgemäße Konstruktion ist so konzipiert, dass also beim Ausspulen eine größere Bremswirkung wirkt bzw. erzielt wird, da die beiden Scheiben näher aneinander liegen als beim Einspulen, denn die Erfindung ermöglicht eine Einstellung der Bremswirkung über das Spaltmaß bzw. den Spaltabstand der beiden Scheiben zueinander. Damit wird einerseits erreicht, dass ein Liftbügel durch einen Ski- bzw. Snowboardfahrer gleichmäßig stark gebremst ausgezogen werden kann, also die Person äußerst gleichmäßig beschleunigt werden kann. Andererseits wird damit erreicht, dass der Liftbügel nach dem Loslassen zügig mit insgesamt reduzierter Bremsung wieder eingezogen werden kann. Ein zusätzlicher Vorteil einer Wirbelstrombremse besteht darin, dass die Wirbelströme mit zunehmender Rotationsgeschwindigkeit stärker werden und damit die Bremswirkung zunimmt. Diese Eigenschaft ergänzt perfekt die bauartbedingten Nachteile der, hier z. B. spiralförmigen, Einzugsfeder, deren Federkraft mit zunehmender Spannung zunimmt, die also zu anfangs des Ausspulvorgangs einen relativ geringen Widerstand bietet und die gegen Ende des Ausspulvorgangs einen relativ hohen Widerstand bietet. Die Wirbelstrombremse unterstützt damit mit ihrer Bremswirkung die Eigenschaft der Einzugsfeder.

Mit der erfindungsgemäßen Idee wird zudem, die auf einen gewissen Kraftbereich beschränkte Federkraft einer einfachen Einzugsfeder derart unterstützt, dass der Liftbügel am Schleppseil, insbesondere mit dem zusätzlichen Gewicht eines Skifahrers, gleichmäßig sachte, also ohne Wucht bzw. Gewalt beschleunigt und auch wieder ohne zusätzliches Gewicht schnell eingespult werden kann.

Weitere, besonders vorteilhafte Ausgestaltungen und Weiterbildungen der Erfindung ergeben sich aus den abhängigen Ansprüchen sowie der nachfolgenden Beschreibung, wobei die unabhängigen Ansprüche einer Anspruchskategorie auch analog zu den abhängigen Ansprüchen und Ausführungsbeispielen bzw. Beschreibungsteilen einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Für die Ausgestaltung und Art der Kopplung zwischen einer der Wirbelstrombremsscheiben und dem Gehäuseteil der Schleppvorrichtung bzw. der Verstellkinematik gibt es verschiedene Möglichkeiten.

Wie erwähnt wird bevorzugt die Magnetscheibe mithilfe der Verstellkinematik beweglich gekoppelt, was nachfolgend auch noch jeweils explizit hervorgehoben wird. Dies ist aber nicht als beschränkend zu verstehen. Prinzipiell könnte auch die Leiterscheibe entsprechend, wie nachfolgend für die Magnetscheibe erläutert, ausgestaltet bzw. aufgebaut, z. B. gekoppelt sein. D. h. Leiterscheibe und Magnetscheibe könnten insoweit vertauscht sein.

Vorzugsweise kann die Verstellkinematik derart ausgebildet sein, dass sich im Betrieb die mittels der Verstellkinematik gekoppelte Wirbelstrombremsscheibe, insbesondere die Magnetscheibe, bei einer Umkehr von einer der Spulrichtungen zur anderen Spulrichtung mit der anderen Wirbelstrombremsscheibe, insbesondere mit der Leiterscheibe zunächst, beispielsweise um ein paar Grad, also z. B. im einstelligen Gradbereich, mitdreht und ab einem, durch ein Kräftegleichgewicht definierten, Drehwinkel die andere Wirbelstrombremsscheibe, insbesondere die Leiterscheibe, abbremst.

Bei den Kräften, die das Kräftegleichgewicht bilden und damit den Drehwinkel bzw. Schwenkwinkel definieren, handelt es sich zum einen um die magnetische Anziehungskraft zwischen den beiden Scheiben und zum anderen um das durch die Wirbelströme erzeugte entgegengesetzt zu dem Magnetfeld der Permanentmagneten wirkende Magnetfeld. Mit "abbremst" ist gemeint, dass sich die mittels der Verstellkinematik gekoppelte Wirbelstrombremsscheibe, vorzugsweise die Magnetscheibe also ab einem gewissen Punkt, z. B. einer Drehung um ein paar Grad im einstelligen Gradbereich, nicht weiter mitdreht, sondern ab dann "drehfest" am Gehäuseteil ist und bremsend auf die andere, sich relativ zu ihr drehende Wirbelstrombremsscheibe wirkt.

Vorzugsweise kann die Wirbelstrombremsscheibe, bevorzugt die Magnetscheibe, mittels der Verstellkinematik der Permanentmagnet-Wirbelstrombremse entlang der Rotationsachse beweglich relativ zum Gehäuseteil im Gehäuseteil gelagert sein. Damit wird erreicht, dass die Wirbelstrombremsscheibe, insbesondere die Magnetscheibe, abhängig von der Spulrichtung entlang der Rotationsachse in zwei verschiedenen Positionen - einmal mit einem kleineren Abstand bzw. Luftspalt zwischen den Wirbelstrombremsscheiben bzw. Scheiben und einmal mit einem größeren Abstand bzw. Luftspalt - zwischen der anderen Wirbelstrombremsscheibe, insbesondere der Leiterscheibe, und dem Gehäuseteil positionierbar, also z. B. verschiebbar, ist.

Vorzugsweise kann die Verstellkinematik die Wirbelstrombremsscheibe, besonders bevorzugt die Magnetscheibe, mittels mehrerer gleichmäßig auf einem Teilkreis - z. B. entlang des Umfangs der Magnetscheibe zwischen Magnetscheibe und Gehäuseteil verlaufender - verteilter Stellelemente mit dem Gehäuseteil verbinden.

Vorzugsweise kann die Verstellkinematik der Permanentmagnet-Wirbelstrombremse mindestens drei - d. h. im einfachsten Fall z. B. genau drei - längliche Stellelemente aufweisen, die sich zwischen der mittels der Verstellkinematik gekoppelten Wirbelstrombremsscheibe, bevorzugt der Magnetscheibe, und dem Gehäuseteil erstrecken.

Alternativ können sich die mindestens drei länglichen Stellelemente zwischen der mittels der Verstellkinematik gekoppelten Wirbelstrombremsscheibe, bevorzugt der Magnetscheibe, und der Seilspule erstrecken.

Bei einer bevorzugten Variante können die Stellelemente jeweils auf einer in einer der Spulrichtungen ansteigenden, azimutal auf einem Teilkreis der Wirbelstrombremsscheibe, besonders bevorzugt der Magnetscheibe, verlaufenden Rampe bzw. Kulissenführung im Wesentlichen nach Art einer schiefen bzw. schrägen Ebene gleitend zur Verkleinerung des Spaltabstands in der ersten Spulrichtung bzw. zur Vergrößerung des Spaltabstands in der zweiten Spulrichtung geführt sein. Zur Verbesserung der Langlebigkeit der gleitenden Führung kann die Rampe reibungsmindernd ausgebildet, beschichtet und/oder mit einem reibungsmindernden Gleitmittel benetzt sein. Zusätzlich kann eine Gleitfläche der Stellelemente auf der Rampe möglichst minimal gewählt sein.

Damit ist gemeint, dass die Stellelemente beispielsweise so mit einem endseitigen nachfolgend noch erläuterten Kopf bzw. einem Flansch auf der Rampe gleitend geführt sein können, dass sich der Spaltabstand zwischen den Wirbelstrombremsscheiben bei einer relativen Rotation in der zweiten Spulrichtung vergrößert und der Spaltabstand in der ersten Spulrichtung verkleinert und dabei vorteilhafterweise eine Gleitreibung minimiert ist.

Bei einer anderen, besonders bevorzugten, Variante können die Stellelemente Schwenkelemente umfassen. D. h. die Verstellkinematik weist dadurch einen Schwenkmechanismus auf, welcher insbesondere hinsichtlich einer besonders guten Resistenz gegen Vereisung und Korrosion vorteilhaft sein kann, da bei einer Verschwenkung in der Regel Hebelkräfte wirken, die für eine sichere Funktion auch bei einer starken Eisbildung genutzt werden können.

Die Schwenkelemente sind hierzu beispielsweise hebelartig ausgebildet, bilden also sozusagen Schwenk-Hebel, so dass z. B. die Magnetscheibe über diese Schwenk-Hebel zur Leiterscheibe hin bzw. von der Leiterscheibe weg zwischen den betreffenden Spaltabständen verschwenkbar ist.

Besonders bevorzugt können die Schwenkelemente jeweils endseitig in der Wirbelstrombremsscheibe und im Gehäuseteil schwenkbar bzw. drehbar relativ zum umgebenden Bauteil gelagert sein.

Alternativ können sie jeweils endseitig in der Wirbelstrombremsscheibe und an der Seilspule schwenkbar gelagert sein.

Endseitig meint hier zumindest einen Endabschnitt der Schwenkelemente, d. h. die Schwenkelemente sind dazwischen in jedem Fall so lang, dass die Wirbelstrombremsscheibe, vorzugsweise die Magnetscheibe, im geraden, nichtgeschwenkten Zustand in dem oben bereits erwähnten geringeren Abstand bzw. Spaltabstand zur anderen Wirbelstrombremsscheibe, vorzugsweise zur Leiterscheibe, angeordnet ist.

An dieser Stelle sei erwähnt, dass Tests gezeigt haben, dass drei gleichmäßig entlang des Umfangs verteilte Stellelemente - beispielsweise entlang des Umfangs jeweils in etwa im 120°-Winkel entfernt voneinander - bereits dafür sorgen können, dass die Scheiben, wenn sie zwischen den beiden Abständen gegeneinander verstellt werden, nicht ungleichmäßig gegeneinander verkeilen. Ähnliches gilt für drei gleichmäßig entlang des Umfangs verteilte Schwenkelemente, welche dadurch nicht ungleichmäßig gegeneinander verkippen. Mit noch mehr Stellelementen bzw. Schwenkelementen im engeren Winkelabstand zueinander könnte logischerweise der Abstand noch gleichmäßiger gestaltet werden. Drei Stellelemente stellen jedoch einen soliden Kompromiss dar, um die Kosten, den Aufwand und die erforderliche Materialmenge minimal zu halten, zugleich aber bereits eine für die Zwecke der Erfindung ausreichend gleichmäßige Kopplung zwischen der Wirbelstrombremsscheibe, bevorzugt der Magnetscheibe und dem Gehäuseteil oder der Seilspule zu erzielen.

Vorzugsweise können die Schwenkelemente in der zweiten Spulrichtung um mindestens 10°, besonders bevorzugt mindestens 15°, ganz besonders bevorzugt mindestens 20° zur Rotationsachse schwenkbar bzw. neigbar gelagert sein.

Alternativ oder zusätzlich können die Schwenkelemente in der zweiten Spulrichtung vorzugsweise um höchstens 45°, besonders bevorzugt höchstens 30°, ganz besonders bevorzugt höchstens 25° zur Rotationsachse schwenkbar bzw. neigbar gelagert sein.

Wieder alternativ oder zusätzlich können sie in der anderen, ersten Spulrichtung an Anschlägen im Gehäuseteil anschlagen, also schwenkfrei gelagert sein.

Für die genaue Ausgestaltung bzw. Wahl der Stellelemente, insbesondere Schwenkelemente, gibt es verschiedene Möglichkeiten.

Vorzugsweise können die Stellelemente Bolzen, Stifte, Schrauben oder Zapfen aufweisen. Besonders bevorzugt können die Schwenkelemente Bolzen, Stifte, Schrauben oder Zapfen aufweisen.

Außerdem können die Stellelemente, ganz besonders bevorzugt die Schwenkelemente, besonders bevorzugt jeweils endseitig einen Kopf, einen Flansch oder eine Mutter als Abschluss aufweisen. D. h., dass der zylindrische Körper, also der überwiegende Teil der Stellelemente bzw. Schwenkelemente relativ zum jeweiligen Abschluss im Außendurchmesser verjüngt ist. Besonders vorteilhaft für eine Montage ist es, wenn zumindest jeweils ein endseitiger Abschluss eines jeweiligen Stell- bzw. Schwenkelements, z. B. mittels eines Werkzeugs lösbar, insbesondere abschraubbar ist.

Der Abschluss kann dabei vorzugsweise jeweils zumindest einen Teil der Wirbelstrombremsscheibe, vorzugsweise der Magnetscheibe oder einen Teil des Gehäuseteils oder der Seilspule hintergreifen.

Vorzugsweise kann ein Spaltabstand bzw. Luftspalt zwischen den Wirbelstrombremsscheiben in der zweiten Spulrichtung mindestens 2,5 mm, besonders bevorzugt mindestens 5 mm, ganz besonders bevorzugt mindestens 7 mm betragen.

Alternativ oder zusätzlich kann ein Spaltabstand zwischen den Wirbelstrombremsscheiben in der ersten Spulrichtung vorzugsweise mindestens 1,5 mm, besonders bevorzugt mindestens 2 mm, ganz besonders bevorzugt mindestens 3 mm betragen.

Vorzugsweise kann der Gehäuseteil in einer zur Magnetscheibe weisenden Gehäusewandung sich quer zu einer radialen Richtung erstreckende Schlitzausnehmungen zum Schwenken der Schwenkelemente aufweisen. Derartige Schlitzausnehmungen verlaufen also zumindest an einem Längsabschnitt entlang der Schlitzausnehmungen senkrecht bzw. quer radialen Richtung des Gehäuseteils bzw. der Gehäusewandung des Gehäuseteils.

Besonders bevorzugt können sich die Schlitzausnehmungen in azimutaler Richtung erstrecken, also auf einer leichten Kreisbahn um den Mittelpunkt des Gehäuseteils, d. h. an jedem Punkt entlang der Schlitzausnehmungen senkrecht zu radialen Richtung.

Quer zu einer radialen Richtung meint hierbei, dass sich die Schlitzausnehmungen senkrecht zur radialen Richtung entlang einer geraden Linie erstrecken.

Vorzugsweise können sich dabei die Schlitzausnehmungen quer zur radialen Richtung, besonders bevorzugt azimutal, gerade so weit entlang der Gehäusewandung des Gehäuseteils erstrecken, dass die Schwenkelemente in einer senkrechten Stellung bzw. Position zwischen Gehäuseteil und Magnetscheibe bei einer Rotation in die erste Spulrichtung (also bei einem Ausspulvorgang des Schleppseils) spätestens jeweils an einem Schlitzende der Schlitzausnehmungen anschlagen. Außerdem können sie sich quer zur radialen Richtung, besonders bevorzugt azimutal, gerade so weit entlang der Gehäusewandung des Gehäuseteils erstrecken, dass sie bei einer Rotation in die zweite Spulrichtung (also bei einem Einspulvorgang des Schleppseils) in der geschwenkten Stellung bzw. Position spätestens am jeweils gegenüberliegenden Schlitzende der Schlitzausnehmungen anschlagen. "Spätestens" meint hier, dass die Schwenkelemente gegebenenfalls bereits früher an anderer Stelle, z. B. im Gehäuseteil selbst, anschlagen können. Alternativ oder zusätzlich können sie auch schon früher aufgrund einer entgegenwirkenden Kraft, z. B. Magnetfeld der Wirbelströme, gestoppt werden, also ehe sie physisch tatsächlich anschlagen.

Für die konkretere Ausgestaltung der Schleppvorrichtung gibt es bevorzugte Möglichkeiten.

Vorzugsweise kann die Schleppvorrichtung mit einer relativ zum Gehäuseteil fest gelagerten länglichen Welle und mit einer relativ zur Welle drehbar gelagerten Seilspule ausgebildet sein. Hierbei kann dann beispielsweise zwischen Welle und Seilspule ein Drehlager realisiert sein.

Alternativ kann die Schleppvorrichtung vorzugsweise mit einer relativ zum Gehäuseteil drehbar gelagerten länglichen Welle und mit einer an einem drehlagerfernen Wellenabschnitt der Welle fest mit der Welle verbundenen Seilspule ausgebildet sein.

Besonders bevorzugt kann die Schleppvorrichtung mit einer relativ zum Gehäuseteil drehbar in einem Drehlager des Gehäuseteils gelagerten länglichen Welle und mit einer an einem drehlagerfernen Wellenabschnitt der Welle fest mit der Welle verbundenen Seilspule ausgebildet sein.

Die Leiterscheibe kann sich dabei jeweils an die Seilspule in axialer Erstreckungsrichtung der Welle bzw. in Richtung der Rotationsachse zum Gehäuseteil hin anschließen und drehfest mit der Seilspule gekoppelt sein. Eine Konstruktion mit innenlaufender Welle ist konstruktionstechnisch relativ einfach zu realisieren und daher bevorzugt, wie anhand eines Ausführungsbeispiels später noch erläutert wird.

Vorzugsweise kann die Welle in zwei voneinander beabstandeten Rillenkugellagern als Drehlager axial geführt sein. Damit ist es möglich, die Welle reibungsarm zu lagern und den Verschleiß zwischen den Bauteilen zu minimieren.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich und lediglich als schematische Darstellung zu verstehen. Es zeigen:
Figur 1 eine perspektivische Ansicht eines Abschnitts eines Förderseils eines Schlepplifts mit einem Ausführungsbeispiel einer erfindungsgemäßen Schleppvorrichtung, im eingebauten Zustand,
Figur 2 eine teilweise im Schnitt dargestellte Ansicht auf das Ausführungsbeispiel aus Figur 1 mit teilweise fehlendem Gehäuse, bei einer Rotation der Seilspule um die Rotationsachse aus Figur 1 in eine erste Spulrichtung,
Figur 3 eine Ansicht gemäß Figur 2 (ohne Teilschnitt), bei einer Rotation der Seilspule um die Rotationsachse aus Figur 1 in eine entgegengesetzte, zweite Spulrichtung,
Figur 4 eine vergrößerte Schnittansicht eines Ausschnitts aus Figur 2, mit Fokus auf eines der Schwenkelemente einer Verstellkinematik der Schleppvorrichtung,
Figur 5 eine vergrößerte Schnittansicht eines Ausschnitts aus Figur 3 mit Fokus auf eines der Schwenkelemente der Verstellkinematik,
Figur 6 eine perspektivische Ansicht eines Teils der Schleppvorrichtung mit einem Ausführungsbeispiel einer alternativen Verstellkinematik der Schleppvorrichtung, wieder mit teilweise fehlendem Gehäuse.

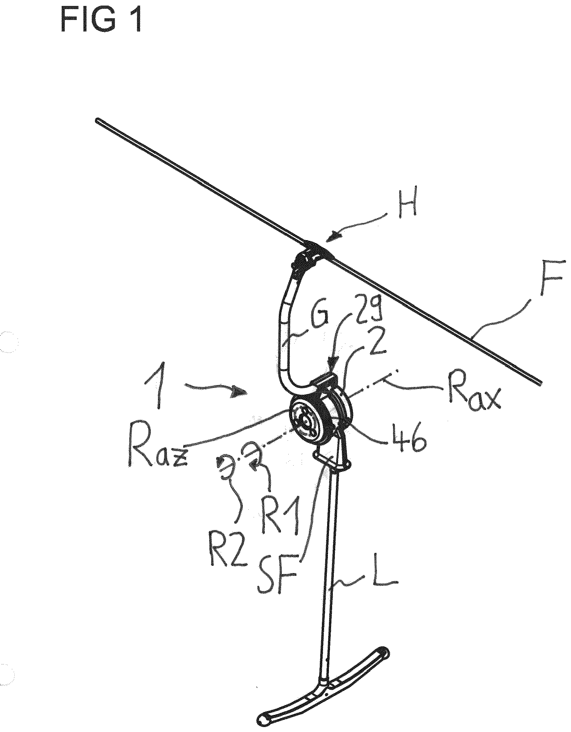

Figur 1 zeigt ein Ausführungsbeispiel einer erfindungsgemäßen Schleppvorrichtung 1 im eingebauten, vollständig montierten Zustand in einem handelsüblichen Schlepplift. Da es hierbei nicht auf die genaue Ausgestaltung des übergeordneten Schlepplifts ankommt, ist nur ein Seilabschnitt eines Förderseils F des Schlepplifts repräsentativ für den gesamten Schlepplift gezeigt. Der weitere Aufbau eines solchen Schlepplifts, z. B. die üblichen Umlenkscheiben am oberen und unteren Ende des Schlepplifts, Schleppliftmasten dazwischen, Motor(en), etc. sind dem Fachmann auf diesem Gebiet hinreichend bekannt.

An dieser Stelle sei erwähnt, dass sich relative Richtungsangaben wie "oben", "unten", "oberhalb", "unterhalb", "oberseitig", "unterseitig", "seitlich bzw. links/rechts", "horizontal", "vertikal", "vorne", "hinten" etc. hierbei, wie auch in der gesamten Schrift, willkürlich auf die Darstellung in den Figuren beziehen. Figur 1 zeigt den typischen Zustand der Schleppvorrichtung 1 während einer Leerfahrt des Schlepplifts, in der sich der Liftbügel L wie ein Pendel mit der Schwerkraft im Wesentlichen nach unten (ohne Berücksichtigung des Winds) ausrichtet.

Das nachfolgend beschriebene Ausführungsbeispiel einer erfindungsgemäßen Schleppvorrichtung 1 eignet sich speziell für den Gebrauch in einem Schlepplift mit hoher Förderseilführung des Förderseils F, wie hier in Figur 1 angedeutet. Die Schleppvorrichtung 1 ist dabei auf einer zum Förderseil F weisenden Seite an einer handelsüblichen c-förmig gebogenen Gehängestange G des Schlepplifts montiert, welche wiederum mittels einer gewöhnlichen Förderseilklemme H der Gehängestange G am Förderseil F des Schlepplifts eingeklemmt bzw. festgeklemmt ist. Die Gehängestange G ist an einem von der Förderseilklemme H entfernten Endbereich über Befestigungsmittel 29 an einem Gehäuseteil 2 der Schleppvorrichtung 1 befestigt, z. B. angeschraubt, so dass die Schleppvorrichtung 1 damit im Betrieb fix am Förderseil F des Schlepplifts fixiert ist.

Die Schleppvorrichtung 1 selbst ist insgesamt mit einem grob "zylindrischen" Gehäuse aufgebaut, wobei förderseilseitig wie zuvor beschrieben die Gehängestange G aufmontiert ist und förderseilabgewandt gegenüberliegend dazu, also im Wesentlichen bodenseitig eine trichterförmig zum Boden bzw. vom Förderseil F weg breiter werdende Schleppbügelführung SF anmontiert ist. Die Schleppbügelführung SF dient wie bereits bekannt einem geregelten Einfangen und Ausrichten eines an einem Schleppseil 7 der Schleppvorrichtung 1 hängenden, z. B. bügel- oder tellerförmigen Schlepp- bzw. Liftbügels L beim Einziehen zurück zur Schleppvorrichtung 1. Denn der Schleppbügel L ist an einem (hier oberen) Ende mittels eines nicht dargestellten üblichen Bügelanschlusses am Schleppseil 7 befestigt, welches sich von einer Seilspule 4 (als flexible Verbindung zwischen einer zu befördernden Person und dem hoch geführten Förderseil F des Schlepplifts) ausspulen bzw. abwickeln lässt, um insbesondere den Ein- und Ausstieg in den fahrenden Schlepplift zu erleichtern, wie weiter unten noch erläutert wird.

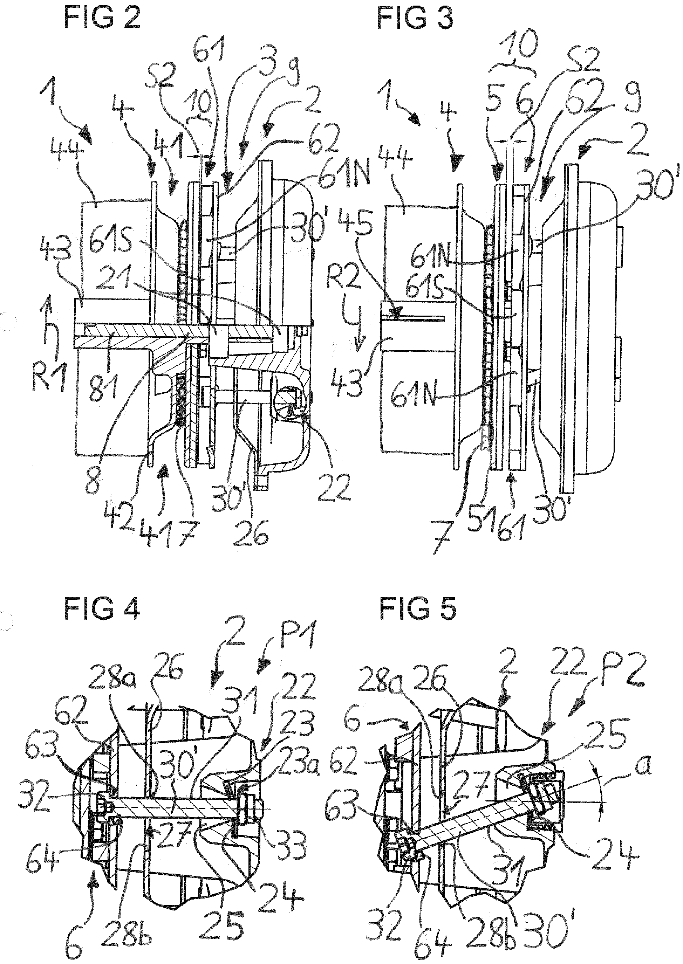

Durch das ansonsten im Wesentlichen zylindrische Gehäuse, welches die Schleppvorrichtung 1 sowohl optisch als auch zum Schutz vor äußeren Witterungsbedingungen weitestgehend umschließt, verläuft axial eine sich aufhängungsbedingt stets von selbst im Wesentlichen horizontal ausrichtende Rotationsachse Rₐₓ der Schleppvorrichtung 1. Die Rotationsachse Rₐₓ definiert eine Achse, um die eine Relativbewegung stattfindet, nämlich die der relativ zum Gehäuseteil 2 drehbar im Gehäuse gelagerten Seilspule 4. Die Rotationsachse Rₐₓ verläuft (zur Erläuterung des Aufbaus der Schleppvorrichtung 1) hintereinander (in Figur 2 von rechts nach links) durch den Gehäuseteil 2 entlang einer Welle 8 durch eine vom Gehäuseteil 2 durch einen kleinen Zwischenraum 9 beabstandete Magnetscheibe 6, eine dazu wiederum durch einen Spaltabstand S1, S2 beabstandete Leiterscheibe 5 sowie durch die Seilspule 4. Physisch wird die Rotationsachse Rₐₓ dabei von einer Welle 8 gebildet bzw. repräsentiert, deren axiale Erstreckungsrichtung Rₐₓ zugleich der Richtung der Rotationsachse Rₐₓ entspricht.

An einem drehlagerferner (in Figur 3 linken) Wellenabschnitt 81 der Welle 8 ist die Seilspule 4 drehfest gekoppelt. Am anderen Ende ist die Welle 8 drehbar in einem Drehlager 21, hier umfassend zwei voneinander beabstandete Rillenkugellager 21, des Gehäuseteils 2 gelagert. Damit ist das in einem Seilaufnahmeraum 41 der Seilspule 4 aufgewickelte Schleppseil 7 der Schleppvorrichtung 1, an dessen radial äußerem Ende der bereits erwähnte Schleppbügel L (in den Figuren 2 und 3 nicht dargestellt) über einen Bügelanschluss befestigt bzw. montiert ist, in einer ersten Spulrichtung R1 bzw. Ausspulrichtung R1 der Seilspule 4 relativ zum Gehäuseteil 2 um die Rotationsachse Rₐₓ ausspulbar sowie in einer entgegengesetzten, zweiten Spulrichtung R2 bzw. Einspulrichtung R2 der Seilspule 4 wieder in den Seilaufnahmeraum 41 aufwickelbar bzw. einspulbar.

Zum Einziehen umfasst die Seilspule 4 bzw. Seiltrommel 4, abgetrennt durch einen Trommelflansch 42 gegenüber dem Seilaufnahmeraum 41, auf einer von der Leiterscheibe 5 abgewandten Seite des Seilaufnahmeraums 41 einen Federmitnehmer 43 bzw. Mitnehmer 43. Längs in axialer Richtung entlang des Mitnehmers 43 ist in einer Mantelfläche des Mitnehmers 43 ein Befestigungsschlitz 45 zur Verankerung einer Einzugsfeder 44 eingebracht. In diesem Befestigungsschlitz 45 ist die Einzugsfeder 44 mit einem radial inneren Ende im montierten Zustand fest verankert. Ihr radial äußeres Ende ist wiederum in einem Einzugsfedergehäuseteil 46 (siehe Figur 1) des Gehäuses der Schleppvorrichtung 1 verankert. Der Einzugsfedergehäuseteil 46 ist seinerseits drehfest mit dem Gehäuseteil 2 verbunden, so dass die Einzugsfeder 44 dafür sorgen kann, dass ein aus dem Seilaufnahmeraum 41 - z. B. durch eine Person beim Fahren bzw. "Schleppen" mit dem Schlepplift - ausgezogenes Schleppseil 7 durch die Federkraft der Einzugsfeder 44 nach dem Loslassen des Schleppseils 7 bzw. des Schleppbügels L am Schleppseil 7 automatisch wieder in den Seilaufnahmeraum 41 eingezogen wird. Dabei wird die Einzugsfeder 44 beim Ausziehen des Schleppseils 7 mit zunehmender Auszugslänge fortwährend gespannt.

Bei der anschließenden Entspannung nach dem Freigeben des Schleppseils 7 durch die Person, wenn diese das Ende des Schlepplifts erreicht hat und kurz vor einer oberen Umlenkscheibe des Schlepplifts aus dem Schlepplift "aussteigt", dreht sich die Seilspule 4 aufgrund der gespeicherten Energie automatisch in die entgegengesetzte, zweite Spulrichtung R2 und wickelt dabei das Schleppseil 7 bestimmungsgemäß wieder auf.

Aufgrund der Tatsache, dass die Einzugsfeder 44 nur beim Ausspulen unter Last (Eigengewicht + Gewicht der Person/-en) betätigt wird und beim Einspulen relativ dazu gesehen ohne Last (nur Eigengewicht), ergeben sich automatisch unterschiedliche Spulgeschwindigkeiten für die beiden Spulrichtungen. Aufgrund des im Allgemeinen deutlichen Gewichtsunterschieds bedarf es einer Anpassung zumindest einer der Spulgeschwindigkeiten. Einzig durch eine geeignete Wahl oder Einstellung der Federkraft der Einzugsfeder lässt sich dieses Problem in jedem Fall nicht zufriedenstellend lösen. Denn die Federkraft muss einerseits ausreichend stark sein, um den Ausspulvorgang möglichst gleichmäßig zu gestalten, andererseits darf den Einspulvorgang nicht zu langsam und nicht zu schnell ablaufen. Um die Spulgeschwindigkeiten ideal anzupassen bzw. einzustellen, d. h. den Ein- und Ausspulvorgang unterschiedlich stark zu bremsen, ist in der Schleppvorrichtung 1 eine Permanentmagnet-Wirbelstrombremse 5, 6 integriert.

Die Permanentmagnet-Wirbelstrombremse 5, 6 besteht im Wesentlichen aus den bereits erwähnten in einem drehrichtungsabhängigen Spaltabstand S1, S2 zueinander beabstandeten, magnetisch zusammenwirkenden Wirbelstrombremsscheiben 5, 6. Einen ersten Teil bildet die elektrisch leitfähige Leiterscheibe 5, die wie bereits erwähnt auf einer zum Seilaufnahmeraum 41 weisenden Seite über einen Eisenrückschluss 51 drehfest mit der Seilspule 4 gekoppelt ist. Einen zweiten Teil bildet die Magnetscheibe 6, die eine Mehrzahl an hier runden Permanentmagneten 61 aufweist, welche kreisringförmig mit wechselnden Polsegmenten 61N, 61S auf der Magnetscheibe 6 angeordnet sind.

Figur 2 zeigt einen Zustand der Permanentmagnet-Wirbelstrombremse 5, 6 beim Ausspulen des Schleppseils 7 in der Ausspulrichtung R1, in dem die Leiterscheibe 5 und die Magnetscheibe 6 in einem sehr engen Abstand S1 zueinander angeordnet sind, so dass die Relativbewegung der Leiterscheibe 5 zur Magnetscheibe 6 besonders stark gebremst wird.

Figur 3 zeigt zum Vergleich einen Zustand kleinerer Bremswirkung der Permanentmagnet-Wirbelstrombremse 5, 6 beim Einspulen des Schleppseils 7 in einer, zur Ausspulrichtung R1 entgegengesetzten Einspulrichtung R2, in dem die Leiterscheibe 5 und die Magnetscheibe 6 in einem größeren Abstand S2 zueinander angeordnet sind, sprich die Magnetscheibe 6 näher am Gehäuseteil 2 und somit weiter weg von der Leiterscheibe 6 angeordnet ist.

Die Veränderung des Abstands zwischen Leiterscheibe 5 und Magnetscheibe 6 wird bewerkstelligt durch eine Änderung des Abstands zwischen Magnetscheibe 6 und Gehäuseteil 2 mittels einer zwangsgeführten Verstellkinematik 3 bzw. mittels eines Verstellmechanismus 3. Magnetscheibe 6 und Gehäuseteil 2 sind wiederum so mit einem Zwischenraum 9 zwischen sich gekoppelt, dass sich der Abstand drehrichtungsabhängig zwangsläufig von selbst passend mittels einer schwenkbaren Kopplung der beiden Komponenten zueinander einstellt. Dabei weisen die Komponenten jeweils entsprechende Öffnungen, Anschläge und Lager auf, in denen drei längliche, starre Schwenkelemente 30' derart schwenkbar gelagert sind, dass die Magnetscheibe 6 in einem definierten Abstandsbereich relativ zum Gehäuseteil 2 beweglich ist.

Wie besonders gut in den Figuren 4 und 5 zu sehen ist, sind die Schwenkelemente 30' als "Schwenk-Hebel" 30' ausgebildet und umfassen einen länglichen zylindrischen Schwenkelementkörper 31 bzw. Körper 31 sowie jeweils endseitig einen Schwenkelementkopf 32 (kurz auch nur als Kopf 32 bezeichnet) und eine Schwenkelementmutter 33 (kurz auch nur als Mutter 33 bezeichnet).

Der größte Teil des Körpers 31 der Schwenkelemente 30' befindet sich innerhalb des Gehäuseteils 2, unter anderem in einem dafür extra darin ausgebildeten Schwenklager 22 in einer konischen Ausnehmung 25 im Inneren des Gehäuseteils 2. Die konisch zur Mutter 33 zulaufende Ausnehmung 25 weist im Bereich ihrer engsten Stelle außenseitig auf einer Hälfte in Richtung der ersten Spulrichtung R1, hier bei dem in Figur 5 gezeigten Schwenkelement 30' oben, eine weitere Ausnehmung in Form eines zurückgesetzten bzw. ausgesparten ersten Schwenklageranschlags 23 auf. Bei dem ersten Schwenklageranschlag 23 handelt es sich um ein Stück "weggenommene" bzw. ausgesparte Wand des Schwenklagers 22, so dass die Mutter 33 des Schwenkelements 30' beim Verschwenken in diesen "Freiraum" bzw. diese Aussparung 23a etwas, hier um ca. 20° zu einer geraden Stellung bzw. Position P1 des Schwenkelements 30', "hineinschwenken" kann und erst dann an dem Schwenklageranschlag 23, also der verbliebenen Wand der Ausnehmung 25 außenseitig bzw. stirnseitig anschlägt.

Auf der übrigen Hälfte (hier in Figur 5 unten) ist keine solche weitere Aussparung in der Wandung der Ausnehmung 25 ausgebildet, so dass die Mutter 33 des Schwenkelements 30' bei einer Rotation in die Gegenrichtung (also bei einer ersten Spulrichtung R1) stets in der geraden, senkrechten Stellung P1 des Schwenkelements 30' daran, also am zweiten Schwenklageranschlag 24 bzw. Anschlag 24 anschlägt. Mit anderen Worten wird in dieser ersten Spulrichtung R1 ein weiteres Schwenken bzw. Rotieren über die gerade Stellung P1 hinaus verhindert, so dass sich die Scheiben 5, 6 in der betreffenden Spulrichtung R1 nicht voneinander entfernen können, also auf den definierten geringeren Spaltabstand S1 zueinander festgelegt sind bzw. in diesem gehalten werden.

Zusätzlich zur Kontaktstelle des Körpers 31 des Schwenkelements 30' an der engsten Stelle der konischen Ausnehmung 25, liegt der Körper 31 (in Längsrichtung in Richtung zur Magnetscheibe 6) noch an einem (hier in Figur 4 oberen) Schlitzende 28a einer Schlitzausnehmung 27 in einer zur Magnetscheibe 6 weisenden Gehäusewandung 26 des Gehäuseteils 2 an, welche Gehäusewandung 26 überall sonst die Komponenten im Inneren des Gehäuseteils 2 abdeckt bzw. umhüllt. Weiter in Richtung Magnetscheibe 6 steht jedes der drei Schwenkelemente 30' jeweils mit dem Kopf 32 in eine jeweilige Öffnung im Eisenrückschluss 62 der Magnetscheibe 6 hinein und hintergreift dort mit seinem Kopf 32 einen umseitigen Öffnungsrand 63, 64. Der Öffnungsrand 63, 64 ist dabei ähnlich wie die ersten und zweiten Schwenklageranschläge 23, 24 bzw. Anschläge 23, 24 ausgebildet, jedoch auf diagonalen Seiten bzw. punktsymmetrisch bezogen auf eine Symmetrieachse durch die Längsachse der Schwenkelemente 30' gespiegelt. Damit ist gemeint, dass die (hier in Figur 4 untere) Hälfte des Öffnungsrands 63, 64, also der zweite Anschlag 64, diagonal gegenüber zum ersten Schwenklageranschlag 23 des Schwenklagers 22 entsprechend leicht in Richtung Gehäusewandung 26 des Gehäuseteils 2 nach außen versetzt bzw. herausgebogen ist, so dass der Kopf 32 des Schwenkelements 30' bei einer Rotation in die zweite Spulrichtung R2 auch auf dieser Seite erst nach dem definierten Drehwinkel a bzw. Schwenkwinkel a daran anschlägt. Zeitgleich würde der Körper 31 zwischen Kopf 32 und Mutter 33 des Schwenkelements 30' bei einer Rotation in die zweite Spulrichtung R2 spätestens an einem (in Figur 5 unteren) Schlitzende 28b der Schlitzausnehmungen 27 blockiert werden bzw. anschlagen.

Die Abstandsänderung wird also erreicht, indem die Schwenkelemente 3 aus der geraden, senkrecht zur Magnetscheibe 6 sowie zum Gehäuseteil 2 ausgerichteten Stellung bzw. Position P1 (siehe Figur 4) in eine, in azimutaler Richtung R_{az} geschwenkte Stellung bzw. Position P2 (siehe Figur 5) gekippt bzw. geschwenkt werden. Die Verkippung bzw. Verschwenkung wird in der zweiten Spulrichtung R2 mit einer entsprechenden Kopplung zwischen Gehäuseteil 2 und Magnetscheibe 6 dadurch erzielt, dass die Schwenkelemente 30' entlang ihrer Längsrichtung an bezüglich der Längsachse der Schwenkelemente 30' und radial diagonalen gegenüberliegenden Seiten in einem Schwenklager 22 des Gehäuseteils 2 sowie in der Magnetscheibe 6 unterschiedlich weit frei bewegbar bzw. mit unterschiedlichem Bewegungsspielraum gelagert sind.

Wenn die Magnetscheibe 6 aufgrund des durch die Wirbelströme bei der Relativbewegung der Leiterscheibe 5 in der zweiten Spulrichtung R2 entstehenden Magnetfelds also in diese azimutale Richtung R_{az} gedrückt wird, kippen bzw. verschwenken die Schwenkelemente 30' automatisch in eine energetisch günstigere Position. Im Extremfall würden sie dabei also in die in Figur 5 dargestellte, weitest möglich geschwenkte Stellung P2 nach außen von der Leiterscheibe 5 weg schwenken. Dabei würde ein die Magnetscheibe 6 teilweise hintergreifender Teil des Kopfs 32 des Schwenkelementes 30' am zweiten Anschlag 64 der Magnetscheibe 6 und ein diagonal gegenüberliegender Teil der Mutter 33 des Schwenkelementes 30' am ersten Schwenklageranschlag 23 des Gehäuseteils 2 anschlagen. Im Normalfall sorgt allerdings die magnetische Anziehungskraft der Magnetscheibe 6 (als permanent wirkendes Magnetfeld, entgegen des erzeugten Wirbelstrommagnetfelds) zur Leiterscheibe 5 dafür, dass sich die Schwenkelemente 30' bereits vor dieser extremen Stellung P2 in einem energetisch günstigen Schwenkwinkel - an dem ein Kräftegleichgewicht zwischen magnetischer Anziehung und magnetischer Abstoßung herrscht - "einpendeln". Der Schwenkwinkel a verändert sich dabei mit der Rotationsgeschwindigkeit der Seilspule 4 bzw. der mit der Seilspule 4 drehfest gekoppelten Leiterscheibe 5.

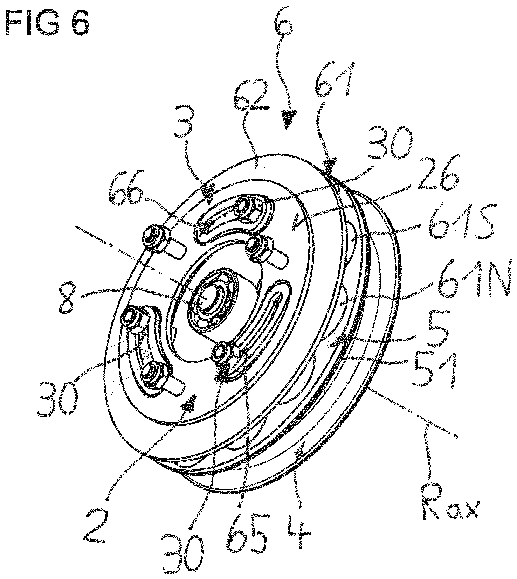

Anhand von Figur 6 wird nun eine alternative Ausgestaltungsform der Verstellkinematik 3 beschrieben. Dabei erstrecken sich anstelle der zuvor beschriebenen Schwenkelemente 30' zwischen dem Gehäuseteil 2 (nur teilweise dargestellt) und der Magnetscheibe 6 parallel zur Axialrichtung Rₐₓ der Welle 8 hier z. B. drei Stellelemente 30. Diese sind an einem Ende (nicht dargestellt) fest an der Magnetscheibe 6 verschraubt bzw. verankert und am anderen Ende in einer Kulisse 66 einer Rampe 65 geführt, die in einer Gehäusewandung 26 des Gehäuseteils 2 ausgebildet bzw. eingearbeitet ist. Dabei verlaufen die Stellelemente 30 mit ihrem Körper von der Magnetscheibe 6 aus gesehen durch die Kulisse 66 bzw. den Kulissenschlitz in der Rampe 65 hindurch und stehen mit einem angeschraubten Kopf, hier z. B. eine einfache Schraubenmutter, die breiter ist als die Kulisse 66, über die Ränder der Kulisse 66 bzw. des Kulissenschlitzes 66 hinaus.

Wenn nun bei dieser Ausgestaltungsform die Magnetscheibe 6 aufgrund des durch die Wirbelströme bei der Relativbewegung der Leiterscheibe 5 in der zweiten Spulrichtung R2 entstehenden Magnetfelds also in diese azimutale Richtung R_{az} gedrückt wird, gleiten die Stellelemente 30 entlang der Rampe 65 mit der Steigung der Rampe 65 automatisch in eine energetisch günstigere Position, so dass also die Magnetscheibe 6 weiter weg von der Leiterscheibe 5 angeordnet ist und ein geringeres Bremsmoment von der Permanentmagnet-Wirbelstrombremse 10 beim Einspulen des Schleppseils 7 auf die Seilspule 4 ausgeübt wird. Um die Gleitreibung entlang der Rampe 65 zur verringern, kann die Rampe 65 mit einem Gleitmittel-Schmierfilm benetzt werden, aus einem reibungsarmen Material ausgebildet sein und/oder mit einer reibungsmindernden Beschichtung beschichtet sein. Alternativ oder zusätzlich können die Köpfe bzw. die Kulissen 66 derart realisiert werden, dass ihre relativen Kontaktflächen auf ein Minimum reduziert sind.

Durch die erfindungsgemäße Konstruktion kann das Schleppseil 7 dabei zudem zu anfangs sehr schnell mit geringer Bremswirkung eingezogen werden und wenn die Federkraft der Einzugsfeder 44 mit zunehmender eingezogener Seillänge nachlässt, sich also die Einzugsgeschwindigkeit verringert, erhöht sich zugleich die Bremswirkung der Permanentmagnet-Wirbelstrombremse 5, 6 und sorgt somit für ein effektives Abbremsen der Seilspule 4 am Ende des Aufwickelns des Schleppseils 7 auf die Seilspule 4. Der Effekt der Erhöhung der Bremswirkung durch Verringerung des Abstands zwischen Leiterscheibe 5 und Magnetscheibe 6 überwiegt dabei zunächst den Effekt dem die Wirbelstrombremsen physikalisch unterliegen, nämlich, dass ihre Bremswirkung mit der Rotationsgeschwindigkeit bzw. Geschwindigkeit abnimmt.

Es wird abschließend noch einmal darauf hingewiesen, dass es sich bei der vorhergehend detailliert beschriebenen Vorrichtung lediglich um ein Ausführungsbeispiel handelt, welches vom Fachmann in verschiedenster Weise modifiziert werden kann, ohne den Bereich der Erfindung zu verlassen. Beispielsweise könnten sich die Rillenkugellager auch zwischen Welle und Seilspule befinden. Ebenso könnten wie oben erwähnt anstelle der Schwenkelemente auch ähnliche Stellelemente im Gehäuseteil in einer Kulissennut mit einem entsprechenden Gefälle geführt sein. Alternativ oder zusätzlich könnten die Schwenkelemente auch mit der Leiterscheibe anstatt der Magnetscheibe gekoppelt sein. Ferner könnte die Magnetscheibe bzw. die Leiterscheibe auch mittels eines Schneckengetriebes zur Einstellung des Spaltmaßes zwischen Leiterscheibe und Magnetscheibe anstatt der Kopplung über die Schwenkelemente mit dem Gehäuseteil gekoppelt sein. Weiterhin schließt die Verwendung der unbestimmten Artikel "ein" bzw. "eine" nicht aus, dass die betreffenden Merkmale auch mehrfach vorhanden sein können.

### Bezugszeichenliste

1 Schleppvorrichtung
2 Gehäuseteil
3 Verstellkinematik
4 Seilspule / Seiltrommel
5 Wirbelstrombremsscheibe / Leiterscheibe
6 Wirbelstrombremsscheibe / Magnetscheibe
7 Schleppseil
8 Welle
9 Zwischenraum zwischen Gehäuseteil und Magnetscheibe
10 Permanentmagnet-Wirbelstrombremse
21 Drehlager des Gehäuseteils
22 Schwenklager des Gehäuseteils
23 Anschläge / erste Schwenklageranschläge im Gehäuseteil
23a Aussparung
24 Anschläge / zweite Schwenklageranschläge im Gehäuseteil
25 Ausnehmungen
26 Gehäusewandung des Gehäuseteils
27 Schlitzausnehmungen
28a, 28b Schlitzenden der Schlitzausnehmungen
29 Befestigungsmittel zur Befestigung an der Gehängestange
30 Stellelemente
30' Schwenkelemente / Schwenk-Hebel
31 Schwenkelementkörper
32 Schwenkelementkopf
33 Schwenkelementmutter
41 Seilaufnahmeraum
42 Außenbordscheibe / Trommelflansch der Seilspule
43 Federmitnehmer / Mitnehmer der Seilspule
44 Einzugsfeder
45 Befestigungsschlitz für Einzugsfeder
46 Einzugsfedergehäuseteil
51 Eisenrückschluss der Leiterscheibe
61 Permanentmagneten / Rundmagneten
61N, 61S Nord- / Südpolsegmente der Permanentmagneten
62 Eisenrückschluss der Magnetscheibe
63 erste Anschläge der Magnetscheibe
64 zweite Anschläge der Magnetscheibe
65 Rampe
66 Kulisse
81 drehlagerferner Wellenabschnitt der Welle
a Schwenkwinkel / Drehwinkel
F Förderseil eines Schlepplifts mit hoher Förderseilführung
G Gehängestange
H Förderseilklemme der Gehängestange
L Liftbügel / Schleppbügel
P1 senkrechte Stellung bzw. Position der Schwenkelemente
P2 geschwenkte Stellung bzw. Position der Schwenkelemente
Rₐₓ Rotationsachse / axiale Erstreckungsrichtung der Welle
R_{az} azimutale Richtung auf den Wirbelstrombremsenscheiben
R1 erste Spulrichtung / Ausspulrichtung
R2 zweite Spulrichtung / Einspulrichtung
S1, S2 Abstand / Spaltabstand / Spalt
SF Schleppbügelführung

## Patentansprüche

1. Schleppvorrichtung (1) für Schlepplifte mit Förderseilführung mit
- einem Gehäuseteil (2) zur Fixierung am Förderseil (F),
- einer relativ zum Gehäuseteil (2) um eine Rotationsachse (Rₐₓ) drehbar gelagerten Seilspule (4) mit einem Seilaufnahmeraum (41) zur Aufnahme eines Schleppseils (7),
und mit einer Permanentmagnet-Wirbelstrombremse (10) zur Abbremsung der Seilspule (4), umfassend zwei durch einen Spaltabstand (S1, S2) voneinander beabstandete magnetisch zusammenwirkende Wirbelstrombremsscheiben (5, 6), von denen zumindest eine Wirbelstrombremsscheibe (5) eine elektrisch leitfähige Leiterscheibe (5) und eine andere Wirbelstrombremsscheibe (6) eine Magnetscheibe (6) mit einer Mehrzahl an, vorzugsweise runden, Permanentmagneten (61) umfasst,
wobei eine der Wirbelstrombremsscheiben (5, 6), vorzugsweise drehfest, mit der Seilspule (4) gekoppelt ist und die andere der Wirbelstrombremsscheiben (5, 6) mit dem Gehäuseteil (2) gekoppelt ist,
**dadurch gekennzeichnet** das zumindest eine der Wirbelstrombremsscheiben (5, 6) derart mittels einer Verstellkinematik (3) mit der Seilspule (4) bzw. mit dem Gehäuseteil (2) gekoppelt ist, dass der Spaltabstand (S1, S2) zwischen den Wirbelstrombremsscheiben (5, 6) in einer ersten Spulrichtung (R1) der Seilspule (4) geringer ist als in einer entgegengesetzten, zweiten Spulrichtung (R2) der Seilspule (4).

2. Schleppvorrichtung nach Anspruch 1, wobei die Verstellkinematik (3) derart ausgebildet ist, dass sich im Betrieb die mittels der Verstellkinematik (3) gekoppelte Wirbelstrombremsscheibe (6), bevorzugt die Magnetscheibe (6), bei einer Umkehr von einer der Spulrichtungen (R1, R2) zur anderen Spulrichtung (R2, R1) mit der anderen Wirbelstrombremsscheibe (5), bevorzugt der Leiterscheibe (5), zunächst mitdreht und ab einem durch ein Kräftegleichgewicht definierten Drehwinkel die andere Wirbelstrombremsscheibe (5) abbremst.

3. Schleppvorrichtung nach Anspruch 1 oder 2, wobei die Wirbelstrombremsscheibe (6) mittels der Verstellkinematik (3) der Permanentmagnet-Wirbelstrombremse (10) entlang der Rotationsachse (Rₐₓ) beweglich relativ zum Gehäuseteil (2) im Gehäuseteil (2) gelagert ist.

4. Schleppvorrichtung nach einem der vorstehenden Ansprüche, wobei die Verstellkinematik (3) die Wirbelstrombremsscheibe (6) mittels mehrerer gleichmäßig auf einem Teilkreis der Wirbelstrombremsscheibe (6) verteilter Stellelemente (30) mit dem Gehäuseteil (2) oder der Seilspule (4) verbindet.

5. Schleppvorrichtung nach einem der vorstehenden Ansprüche, wobei die Verstellkinematik (3) der Permanentmagnet-Wirbelstrombremse (5, 6) mindestens drei längliche Stellelemente (30), aufweist, die sich zwischen der mittels der Verstellkinematik (3) gekoppelten Wirbelstrombremsscheibe (6) und dem Gehäuseteil (2) oder der Seilspule (4) erstrecken.

6. Schleppvorrichtung nach Anspruch 4 oder 5, wobei die Stellelemente (30) Schwenkelemente (30`) umfassen, die vorzugsweise jeweils endseitig in der Wirbelstrombremsscheibe (6) und im Gehäuseteil (2) oder an der Seilspule (4) schwenkbar gelagert sind.

7. Schleppvorrichtung nach Anspruch 6, wobei die Schwenkelemente (30`) in der zweiten Spulrichtung (R2) vorzugsweise um mindestens 10°, besonders bevorzugt mindestens 15°, ganz besonders bevorzugt mindestens 20° zur Rotationsachse (Rₐₓ) schwenkbar gelagert sind
und/oder
wobei die Schwenkelemente (30`) in der zweiten Spulrichtung (R2) vorzugsweise um höchstens 45°, besonders bevorzugt höchstens 30°, ganz besonders bevorzugt höchstens 25° zur Rotationsachse (Rₐₓ) schwenkbar gelagert sind
und/oder
vorzugsweise in der anderen, ersten Spulrichtung (R1) an Anschlägen (24) im Gehäuseteil (2) anschlagen.

8. Schleppvorrichtung nach einem der Ansprüche 4 oder 5, wobei die Stellelemente (30) jeweils auf einer in einer der Spulrichtungen (R1, R2) ansteigenden, azimutal auf einem Teilkreis der Wirbelstrombremsscheibe (6) verlaufenden Rampe (65) gleitend geführt sind.

9. Schleppvorrichtung nach einem der Ansprüche 4 bis 8, wobei die Stellelemente (30), vorzugsweise Schwenkelemente (30`), Bolzen, Stifte oder Schrauben aufweisen, und vorzugsweise jeweils endseitig einen Kopf (32), einen Flansch oder eine Mutter (33) als Abschluss (32, 33) aufweisen, welcher Abschluss (32, 33) jeweils zumindest einen Teil (62, 63, 64) der Wirbelstrombremsscheibe (6) oder einen Teil (23, 24) des Gehäuseteils (2) oder der Seilspule (4) hintergreift.

10. Schleppvorrichtung nach einem der vorstehenden Ansprüche, wobei ein Spaltabstand (S2) zwischen den Wirbelstrombremsscheiben (5, 6) in der zweiten Spulrichtung (R2) vorzugsweise mindestens 2,5 mm, besonders bevorzugt mindestens 5 mm, ganz besonders bevorzugt mindestens 7 mm beträgt
und/oder
wobei ein Spaltabstand (S1) zwischen den Wirbelstrombremsscheiben (5, 6) in der ersten Spulrichtung (R1) vorzugsweise mindestens 1,5 mm, besonders bevorzugt mindestens 2 mm, ganz besonders bevorzugt mindestens 3 mm beträgt.

11. Schleppvorrichtung nach einem der Ansprüche 6 bis 10, wobei der Gehäuseteil (2) in einer zur Magnetscheibe (6) weisenden Gehäusewandung (26) sich quer zu einer radialen Richtung, vorzugsweise in azimutaler Richtung (R_{az}), erstreckende Schlitzausnehmungen (27) zum Schwenken der Schwenkelemente (30`) aufweist,
wobei sich vorzugsweise die Schlitzausnehmungen (27) quer zu einer radialen Richtung, besonders bevorzugt azimutal, gerade soweit entlang der Gehäusewandung (26) des Gehäuseteils (2) erstrecken, dass die Schwenkelemente (30`) in einer senkrechten Stellung (P1) bei einer Rotation in die erste Spulrichtung (R1) jeweils an einem Schlitzende (28a) der Schlitzausnehmungen (27) anschlagen und bei einer Rotation in die zweite Spulrichtung (R2) in der geschwenkten Stellung (P2) am jeweils gegenüberliegenden Schlitzende (28b) anschlagen.

12. Schleppvorrichtung nach einem der vorstehenden Ansprüche, mit einer relativ zum Gehäuseteil (2) fest oder drehbar, vorzugsweise in einem Drehlager (21) des Gehäuseteils (2), gelagerten Welle (8) und mit einer relativ zur Welle (8) drehbar gelagerten oder an einem drehlagerfernen Wellenabschnitt (81) der Welle (8) fest mit der Welle (8) verbundenen Seilspule (4).

13. Schleppvorrichtung nach Anspruch 12, wobei die Welle (8) in zwei voneinander beabstandeten Rillenkugellagern (21) als Drehlager (21) axial geführt ist.

14. Verfahren zum Abbremsen eines Schleppseils (7) einer Schleppvorrichtung (1) für Schlepplifte mit Förderseilführung,
wobei die Schleppvorrichtung (1) einen Gehäuseteil (2) zur Fixierung am Förderseil (F) sowie eine relativ zum Gehäuseteil (2) um eine Rotationsachse (Rₐₓ) drehbar gelagerte Seilspule (4) umfassend einen Seilaufnahmeraum (41) zur Aufnahme des Schleppseils (7) aufweist,
wobei zwei durch einen Spaltabstand (S1, S2) voneinander beabstandete, magnetisch zusammenwirkende Wirbelstrombremsscheiben (5, 6), von denen zumindest eine Wirbelstrombremsscheibe (5) eine elektrisch leitfähige Leiterscheibe (5) und eine andere Wirbelstrombremsscheibe (6) eine Magnetscheibe (6) mit einer Mehrzahl an, vorzugsweise runden, Permanentmagneten (61) umfasst, relativ zueinander abgebremst werden, wobei eine der Wirbelstrombremsscheiben (5, 6) mit der Seilspule (4) mitdreht und die andere der Wirbelstrombremsscheiben (5, 6) ab einem gewissen, vorzugsweise durch ein Kräftegleichgewicht definierten Drehwinkel durch eine Kopplung mit dem Gehäuseteil (2) abgestoppt wird,
wobei die Wirbelstrombremsscheiben (5, 6) mittels einer Verstellkinematik (3) in einer ersten Spulrichtung (R1) der Seilspule (4) bei einem Ausspulen des Schleppseils (7) in einem geringeren Spaltabstand (S1) zueinander gehalten werden als in einer entgegengesetzten, zweiten Spulrichtung (R2) der Seilspule (4) bei einem Einspulen des Schleppseils (7).

## Claims

1. Towing device (1) for drag lifts with conveyor rope guide with
- a housing part (2) for fixing to the conveyor rope (F),
- a rope reel (4) mounted rotatably relative to the housing part (2) about an axis of rotation (Rₐₓ) with a rope receiving space (41) for receiving a towing rope (7),
and with a permanent magnet eddy current brake (10) for braking the cable reel (4), comprising two magnetically interacting eddy current brake disks (5, 6) spaced apart by a gap distance (S1, S2), of which at least one eddy current brake disk (5) comprises an electrically conductive conductor disk (5) and another eddy current brake disk (6) comprises a magnetic disk (6) with a plurality of, preferably round, permanent magnets (61),
wherein one of the eddy current brake disks (5, 6) is coupled, preferably non-rotatably, to the rope reel (4) and the other of the eddy current brake disks (5, 6) is coupled to the housing part (2),
**characterized in that** at least one of the eddy current brake discs (5, 6) is coupled to the rope reel (4) or to the housing part (2) by means of adjusting kinematics (3) in such a way that the gap distance (S1, S2) between the eddy current brake discs (5, 6) is smaller in a first winding direction (R1) of the rope reel (4) than in an opposite, second winding direction (R2) of the rope reel (4).

2. Towing device according to claim 1, wherein the adjusting kinematics (3) is designed in such a way that during operation the eddy current brake disk (6) coupled by means of the adjusting kinematics (3), preferably the magnetic disk (6), rotates with the other eddy current brake disk (5), preferably the conductor disk (5), when reversing from one of the winding directions (R1, R2) to the other winding direction (R2, R1), initially rotates with the other eddy current brake disk (5), preferably the conductor disk (5), and brakes the other eddy current brake disk (5) from an angle of rotation defined by a balance of forces.

3. Towing device according to claim 1 or 2, wherein the eddy current brake disk (6) is mounted in the housing part (2) so as to be movable relative to the housing part (2) along the axis of rotation (Rₐₓ) by means of the adjustment kinematics (3) of the permanent magnet eddy current brake (10).

4. Towing device according to one of the preceding claims, wherein the adjusting kinematics (3) connects the eddy current brake disk (6) to the housing part (2) or the rope reel (4) by means of a plurality of adjusting elements (30) distributed uniformly on a pitch circle of the eddy current brake disk (6).

5. Towing device according to one of the preceding claims, wherein the adjusting kinematics (3) of the permanent magnet eddy current brake (5, 6) has at least three elongated adjusting elements (30), which extend between the eddy current brake disk (6) coupled by means of the adjusting kinematics (3) and the housing part (2) or the rope reel (4).

6. Towing device according to claim 4 or 5, wherein the adjusting elements (30) comprise pivoting elements (30'), which are preferably each pivotably mounted at the end in the eddy current brake disk (6) and in the housing part (2) or on the rope reel (4).

7. Towing device according to claim 6, wherein the pivoting elements (30') are mounted so as to be pivotable in the second winding direction (R2) preferably by at least 10°, particularly preferably at least 15°, very particularly preferably at least 20° relative to the axis of rotation (Rₐₓ)
and/or
wherein the pivoting elements (30') are preferably mounted so as to be pivotable in the second winding direction (R2) by at most 45°, particularly preferably at most 30°, most particularly preferably at most 25° relative to the axis of rotation (Rₐₓ)
and/or
preferably in the other, first winding direction (R1) stopping against stops (24) in the housing part (2).

8. Towing device according to one of claims 4 or 5, wherein the adjusting elements (30) are each slidingly guided on a ramp (65) which rises in one of the winding directions (R1, R2) and running azimuthally on a pitch circle of the eddy current brake disk (6).

9. Towing device according to one of claims 4 to 8, wherein the adjusting elements (30), preferably swivel elements (30'), have bolts, pins or screws, and preferably each have a head (32), a flange or a nut (33) at the end as a closure (32, 33), which closure (32, 33) engages behind at least a part (62, 63, 64) of the eddy current brake disk (6) or a part (23, 24) of the housing part (2) or the rope reel (4).

10. Towing device according to one of the preceding claims, wherein a gap distance (S2) between the eddy current brake disks (5, 6) in the second winding direction (R2) is preferably at least 2.5 mm, particularly preferably at least 5 mm, very particularly preferably at least 7 mm
and/or
wherein a gap distance (S1) between the eddy current brake disks (5, 6) in the first winding direction (R1) is preferably at least 1.5 mm, particularly preferably at least 2 mm, very particularly preferably at least 3 mm.

11. Towing device according to one of claims 6 to 10, wherein the housing part (2) has, in a housing wall (26) facing the magnetic disk (6), slot recesses (27) extending transversely to a radial direction, preferably in the azimuthal direction (R_{az}), for pivoting the pivoting elements (30'),
wherein preferably the slot recesses (27) extend transversely to a radial direction, particularly preferably azimuthally, just so far along the housing wall (26) of the housing part (2), that the swivel elements (30'), in a vertical position (P1), strike against one slot end (28a) of the slot recesses (27) when rotating in the first winding direction (R1) and strike against the respective opposite slot end (28b) when rotating in the second winding direction (R2) in the swiveled position (P2).

12. Towing device according to one of the preceding claims, with a shaft (8) mounted fixedly or rotatably relative to the housing part (2), preferably in a pivot bearing (21) of the housing part (2), and with a rope reel (4) mounted rotatably relative to the shaft (8) or connected fixedly to the shaft (8) at a shaft section (81) of the shaft (8) remote from the pivot bearing.

13. Towing device according to claim 12, wherein the shaft (8) is axially guided in two spaced-apart deep groove ball bearings (21) as a pivot bearing (21).

14. Method for braking a towing rope (7) of a towing device (1) for drag lifts with conveyor rope guide,
wherein the towing device (1) has a housing part (2) for fixing to the conveyor rope (F) and a rope reel (4) mounted for rotation relative to the housing part (2) about an axis of rotation (Rₐₓ) and comprising a rope receiving space (41) for receiving the towing rope (7),
wherein two magnetically interacting eddy current brake disks (5, 6) spaced apart by a gap distance (S1, S2), of which at least one eddy current brake disk (5) comprises an electrically conductive conductor disk (5) and another eddy current brake disk (6) comprises a magnet disk (6) with a plurality of, preferably round, permanent magnets (61), are braked relative to one another, wherein one of the eddy current brake disks (5, 6) rotates with the rope reel (4) and the other of the eddy current brake disks (5, 6) is stopped from a certain angle of rotation, preferably defined by a balance of forces, by a coupling with the housing part (2), wherein the eddy current brake disks (5, 6) are held at a smaller gap distance (S1) from one another in a first winding direction (R1) of the rope reel (4) when the towing rope (7) is spooled out than in an opposite, second winding direction (R2) of the rope reel (4) when the towing rope (7) is spooled in by means of adjusting kinematics (3).

## Revendications

1. Dispositif de remorquage (1) pour téléskis avec guidage du câble porteur-tracteur avec
- une partie du boîtier (2) pour la fixation au câble porteur-tracteur (F),
- une bobine de câble (4) montée de manière à pouvoir tourner autour d'un axe de rotation (Rₐₓ) par rapport à la partie de boîtier (2) et comportant un espace de réception de câble (41) destiné à recevoir un câble de remorquage (7),
et avec un frein à courants de Foucault à aimant permanent (10) pour le freinage de la bobine de câble (4), comprenant deux disques de frein à courants de Foucault (5, 6) coopérant magnétiquement et espacés l'un de l'autre par une distance d'entrefer (S1, S2), dont au moins un disque de frein à courants de Foucault (5) comprend un disque conducteur (5) électriquement et un autre disque de frein à courants de Foucault (6) comprend un disque magnétique (6) avec une pluralité d'aimants permanents (61), de préférence ronds,
l'une des poulies de frein à courants de Foucault (5, 6) étant couplée, de préférence de manière non rotative, à la bobine de câble (4) et l'autre des poulies de frein à courants de Foucault (5, 6) étant couplée à la partie de boîtier (2),
**caractérisé en ce qu'**au moins l'une des poulies de frein à courants de Foucault (5, 6) est couplée au moyen d'une cinématique de réglage (3) à la bobine de câble (4) ou à la partie de boîtier (2) de telle sorte que la distance d'entrefer (S1, S2) entre les poulies de frein à courants de Foucault (5, 6) est plus faible dans une première direction de bobinage (R1) de la bobine de câble (4) que dans une deuxième direction de bobinage (R2) opposée de la bobine de câble (4).

2. Dispositif de remorquage selon la revendication 1, dans lequel la cinématique de réglage (3) est conçue de telle sorte qu'en fonctionnement, le disque de frein à courants de Foucault (6) couplé au moyen de la cinématique de réglage (3), de préférence le disque magnétique (6), lors d'une inversion de l'une des directions de bobinage (R1, R2) à l'autre direction de bobinage (R2, R1), tourne d'abord avec l'autre disque de frein à courants de Foucault (5), de préférence le disque conducteur (5), et freine l'autre disque de frein à courants de Foucault (5) à partir d'un angle de rotation défini par un équilibre de forces.

3. Dispositif de remorquage selon la revendication 1 ou 2, dans lequel le disque de frein à courants de Foucault (6) est monté dans la partie du boîtier (2) de manière à être mobile par rapport à la partie du boîtier (2) le long de l'axe de rotation (Rₐₓ ) au moyen de la cinématique de réglage (3) du frein à courants de Foucault à aimants permanents (10).

4. Dispositif de remorquage selon l'une des revendications précédentes, dans lequel la cinématique de réglage (3) relie le disque de frein à courants de Foucault (6) à la partie du boîtier (2) ou à la bobine de câble (4) au moyen de plusieurs éléments de réglage (30) répartis uniformément sur un cercle partiel du disque de frein à courants de Foucault (6).

5. Dispositif de remorquage selon l'une des revendications précédentes, dans lequel la cinématique de réglage (3) du frein à courants de Foucault à aimant permanent (5, 6) présente au moins trois éléments de réglage allongés (30) qui s'étendent entre le disque de frein à courants de Foucault (6) couplé au moyen de la cinématique de réglage (3) et la partie de boîtier (2) ou la bobine de câble (4).

6. Dispositif de remorquage selon la revendication 4 ou 5, dans lequel les éléments de réglage (30) comprennent des éléments pivotants (30') qui sont de préférence montés pivotants chacun à une extrémité dans le disque de frein à courants de Foucault (6) et dans la partie du boîtier (2) ou sur la bobine de câble (4).

7. Dispositif de remorquage selon la revendication 6, dans lequel les éléments pivotants (30') sont montés de manière à pouvoir pivoter dans la deuxième direction de bobinage (R2) de préférence d'au moins 10°, de plus préférence d'au moins 15°, de manière tout à fait préférée d'au moins 20° par rapport à l'axe de rotation (Rₐₓ)
et/ou
les éléments pivotants (30') étant montés de manière à pouvoir pivoter dans la deuxième direction de bobinage (R2) de préférence de 45° au maximum, de plus préférence de 30° au maximum, de manière tout à fait préférée de 25° au maximum par rapport à l'axe de rotation (Rₐₓ)
et/ou
de préférence dans l'autre direction, la première direction de bobinage (R1), contre des butées (24) dans la partie de boîtier (2).

8. Dispositif de remorquage selon l'une des revendications 4 ou 5, dans lequel les éléments de réglage (30) sont guidés chacun en coulissement sur une rampe (65) ascendante dans l'une des directions de bobinage (R1, R2) et s'étendant en azimut sur un cercle primitif du disque de frein à courants de Foucault (6).

9. Dispositif de remorquage selon l'une des revendications 4 à 8, dans lequel les éléments de réglage (30), de préférence des éléments pivotants (30'), présentent des boulons, des goupilles ou des vis, et présentent de préférence à chaque extrémité une tête (32), une bride ou un écrou (33) comme terminaison (32, 33), laquelle terminaison (32, 33) s'engage respectivement derrière au moins une partie (62, 63, 64) du disque de frein à courants de Foucault (6) ou une partie (23, 24) de la partie du boîtier (2) ou de la bobine de câble (4).

10. Dispositif de remorquage selon l'une des revendications précédentes, dans lequel une distance d'entrefer (S2) entre les disques de frein à courants de Foucault (5, 6) dans la deuxième direction de bobinage (R2) est de préférence d'au moins 2,5 mm, de plus préférence d'au moins 5 mm, de manière particulièrement préférée d'au moins 7 mm
et/ou
dans lequel une distance d'entrefer (S1) entre les disques de frein à courants de Foucault (5, 6) dans la première direction de bobinage (R1) est de préférence d'au moins 1,5 mm, de plus préférence d'au moins 2 mm, de manière particulièrement préférée d'au moins 3 mm.

11. Dispositif de remorquage selon l'une des revendications 6 à 10, dans lequel la partie de boîtier (2) présente, dans une paroi de boîtier (26) orientée vers le disque magnétique (6), des évidements en forme de fente (27) s'étendant transversalement à une direction radiale, de préférence dans la direction azimutale (R_{az}), pour le pivotement des éléments pivotants (30'),
de préférence les évidements en fente (27) s'étendant transversalement à une direction radiale, de préférence azimutale, juste aussi loin que le long de la paroi de boîtier (26) de la partie de boîtier (2), que les éléments pivotants (30'), dans une position verticale (P1), lors d'une rotation dans la première direction de bobinage (R1), butent respectivement contre une extrémité de fente (28a) des évidements de fente (27) et, lors d'une rotation dans la deuxième direction de bobinage (R2), dans la position pivotée (P2), butent respectivement contre l'extrémité de fente opposée (28b).

12. Dispositif de remorquage selon l'une des revendications précédentes, avec un arbre (8) monté fixe ou rotatif par rapport à la partie de boîtier (2), de préférence dans un palier de rotation (21) de la partie de boîtier (2), et avec une bobine de câble (4) montée rotative par rapport à l'arbre (8) ou reliée fixement à l'arbre (8) sur un tronçon d'arbre (81) de l'arbre (8) éloigné du palier de rotation.

13. Dispositif de remorquage selon la revendication 12, dans lequel l'arbre (8) est guidé axialement dans deux roulements à billes à gorge profonde (21) espacés l'un de l'autre et servant de palier de rotation (21).

14. Procédé de freinage d'un câble de remorquage (7) d'un dispositif de remorquage (1) pour téléskis avec guidage du câble porteur-tracteur,
le dispositif de remorquage (1) présentant une partie de boîtier (2) pour la fixation au câble de porteur-tracteur (F) ainsi qu'une bobine de câble (4) logée de manière rotative par rapport à la partie de boîtier (2) autour d'un axe de rotation (Rₐₓ) et comprenant un espace de réception de câble (41) pour recevoir le câble de remorquage (7),
deux disques de frein à courants de Foucault (5, 6) espacés l'un de l'autre d'une distance d'entrefer (S1, S2) et coopérant magnétiquement, dont au moins un disque de frein à courants de Foucault (5) est un disque conducteur (5) électriquement et un autre disque de frein à courants de Foucault (6) est un disque magnétique (6) avec une pluralité de bobines magnétiques, de préférence rondes, l'un par rapport à l'autre, l'un des disques de frein à courants de Foucault (5, 6) tournant avec la bobine de câble (4) et l'autre des disques de frein à courants de Foucault (5, 6) étant arrêté par un couplage avec la partie de boîtier (2) à partir d'un certain angle de rotation, de préférence défini par un équilibre des forces,
les disques de frein à courants de Foucault (5, 6) étant maintenus, au moyen d'une cinématique de réglage (3), dans une première direction de bobinage (R1) de la bobine de câble (4), lors d'un débobinage du câble de remorquage (7), à une distance d'entrefer(S1) plus faible l'un par rapport à l'autre que dans une deuxième direction de bobinage (R2) opposé de la bobine de câble (4), lors d'un bobinage du câble de remorquage (7).
